# EUROPEAN PATENT APPLICATION

(11) **EP 4 467 855 A1**
(43) Date of publication of application: **27.11.2024**
(21) Application number: 24176025.5
(22) Date of filing: 15.05.2024
(51) Int. Cl.: F16K 11/087, F16K 11/16, F16K 31/53, F24D 19/10, F24F 11/89, F16K 5/12, F16K 31/528

(54) **CONTROL VALVE**

(30) Priority: 23.05.2023 CH 5442023
(71) Applicant: Belimo Holding AG, 8340 Hinwil (CH)
(72) Inventor: Veseli, Dzemil, 9606 Bütschwil (CH); Bamberger, Georg, 8408 Winterthur (CH); Keller, Urs, 8340 Hinwil (CH); Niederhauser, Urs, 8422 Pfungen (CH)
(74) Representative: Rentsch Partner AG

(57) **Abstract**

The disclosure concerns a control valve (3) with a first sub-valve (1) and a second sub-valve (2), the first sub-valve (1) and the second sub-valve (2) being fluidically separate three-way-valves. The control valve (3) includes an actuator coupler (31), the actuator coupler (31) being configured for coupling to an output member of a valve actuator (8). A control setting of the actuator coupler (31) is continuously adjustable between an A-end setting and a B-end setting. In an A-open configuration a first A-port (1A) of the first sub-valve (1) is fluidically connected to a first AB-port (1AB) of the first sub-valve (1) and a first B-port (1B) of the first sub-valve (1) is fluidically blocked. In a B-open configuration the first B-port (1B) is fluidically connected to the first AB-port (1AB) and the first B-port (1B) is fluidically blocked. The second sub-valve (2) is in an A-control configuration if the control setting is in an A-control range and is in an alternative B-control configuration if the control setting is in a B-control range, wherein the A-control range extends to the A-end setting and the B-control range extends to the B-end setting. In the A-control configuration a second A-port (2A) of the second sub-valve (2) is fluidically connected to the second AB-port (2AB) and a second B-port (2B) of the second sub-valve (2) is fluidically blocked, wherein a second valve opening of the second sub-valve (2) decreases, in particular monotonically decreases, with the control setting (s) moving away from the A-end setting. In the B-control range, the second B-port (2B) is fluidically connected to the second AB-port (2AB) and the second A-port (2A) is fluidically blocked, wherein the second valve opening decreases with the control setting (s) moving away from the B-end setting.

## Description

### FIELD OF THE INVENTION

The present invention relates to control valves as used, e.g., in HVAC (Heating, Ventilation and Air Conditioning) systems, as well as fluidic arrangements and HVAC systems with such control valves.

### BACKGROUND OF THE INVENTION

In complex fluidic arrangements, for example modern HVAC (Heating, Ventilation and Air Conditioning) systems, there is a need for alternatively using a heat exchanger for heating or cooling purposes, respectively as part of a heating circuit or cooling circuit. Further, it is desirable to allow continuous control of the fluid flow for both heating and cooling. For this purpose, six-way valves are known in the art that are realized by two 3-way continuous control valves of generally identical design. The two 3-way control valves are actuated either by a common valve actuator or by separate valve actuators in a coordinated and generally synchronous manner.

### SUMMARY OF THE INVENTION

It is an overall objective of the present disclosure to provide a control valve, in particular a six-way valve as mentioned, that is robust and reliable and can be actuated by a single valve actuator.

The overall objective is achieved based on the principle of separating the functions of switching between alternative fluidic circuits, for example a heating circuit and a cooling circuit, and a continuous control of the fluid flow. While two fluidically separate three-way valves are foreseen as known in the art, one of the valves is a switching valve respectively is operated as switching valve, while the other valve is a continuous control valve.

In an aspect, the present disclosure concerns a control valve. The control valve includes a first sub-valve and a second sub-valve. The first sub-valve and the second sub-valve are three-way-valves and are fluidically separate. The first sub-valve has a first A-port, a first AB-port, and a first B-port. The second sub-valve has a second A-port, a second AB-port, and a second B-port.

The first and second sub-valve are fluidic valves. The control valve may generally be used for any type of fluid, being it gas, liquid, or a mixture thereof. In the context of HVAC (Heating, Ventilation and Air Conditioning) systems as typical application scenario, the fluid is typically a heat transport fluid, in particular water or a water/glycol mixture. The fluid may, however, also be a gas or gas mixture, such as air, or steam. The control valve may be a six-way valve respectively the first sub-valve and the second sub-valve may, in combination form a six-way valve.

The control valve includes an actuator coupler. The actuator coupler is configured for coupling to an output member of a valve actuator. A control setting of the actuator coupler is continuously adjustable between an A-end setting and a B-end setting. The control setting indicates a position, for example a rotatory position, of the actuator coupler. As discussed further below in more detail, the actuator coupler is common and used for controlling both the first and second sub-valve via a common valve actuator. The control setting generally uniquely defines a configuration respectively position of both a first valve member of the first sub-valve and of a second valve member of the second sub-valve. It is noted that the control setting moving away from the A-end setting implies a moving towards the B-end setting and vice versa.

In a typical design as generally assumed in the following and as discussed below, the actuator coupler is rotatably mounted and the control setting is defined by a rotational angle. For such design, the actuator coupler may, e.g., be designed as shaft. Such design, however, is not essential. In other designs, the actuator coupler may, e.g., be designed to be linearly displaceable, e.g. in the form of a slider, and the control setting may be defined by a linear displacement position. The A-end setting and the B-end setting may be associated with physical stops, which, however is not essential. In any case, the A-end setting and the B-end setting define the opposite ends of the operational range of the control setting.

The first sub-valve has a first valve member and the second sub-valve has a second valve member, wherein the first valve member and the second valve member are movable via the actuator coupler. The expression "valve member" refers to the movable part of a (sub-)valve, for example the ball of a ball valve, that is moved for switching, controlling or regulating the fluid flow.

The part of a (sub-)valve relative to which the valve member moves is referred to as "valve housing". The ports are generally formed in respectively by the valve housing of the respective sub-valve. The first sub-valve housing of the first sub-valve and the second sub-valve housing of the second sub-valve may generally be structurally separate or may be formed in a fully or partly integrated manner, for example from a single casted and/or machined piece of metal.

The elements directly contacting and bearing the valve member of a (sub-)valve are referred to as valve seat. As generally known in the art, fluidic connection passages or connection channels to a port may extend through a valve seat. The valve seats of a (sub-)valve and the respective valve member are configured to establish a fluidic tight sealing.

The first sub-valve and the second sub-valve enable in each case two alternative fluidic connections, namely either of the A-port and the AB-port, or of the B-port and the AB-port of the respective sub-valve. No fluid connection however, is possible of the respective A-port and the respective B-port of a with a sub-valve. Also, both of the A-port and the B-port of a sub-valve may not be connected with the AB-port of the respective sub-valve at the same time.

The first sub-valve is in an A-open configuration if the control setting is in an A-open range and is in an alternative B-open configuration if the control setting is in a B-open range. The A-open range extends to the A-end setting and the B-open range extends to the B-end setting. In the A-open configuration, the first A-port is fluidically connected to the first AB-port and the first B-port is fluidically blocked. In the B-open configuration, the first B-port is fluidically connected to the first AB-port and the first A-port is fluidically blocked.

As discussed further below in more detail, the first sub-valve is operated as a switching valve, also referred to as change-over valve, that alternatively fluidically couples (in the A-open range) the first A-port with the first AB-port or (in the B-open range), the first B-port with the first AB-port, while the other of the first A-port and the first B-port is in each case fluidically blocked.

Generally, the first valve opening is constant, in particular maximal, in the A-open configuration and the B-open configuration. For the first sub-valve, the expression "valve opening" refers to the effective, e.g. percentage respectively relative, opening width of the fluidic path between the first AB-port and either of the first A-port or the first B-port. Similarly, for the second sub-valve, the expression "valve opening" refers to the effective, e.g. percentage respectively relative, opening width of the fluidic path between the second AB-port and either of the second A-port or the second B-port. A value indicative of the valve opening is the flow coefficient Cᵥ as generally known in the art.

The second sub-valve is in an A-control configuration if the control setting is in an A-control range and is in an alternative B-control configuration if the control setting is in a B-control range. The A-control range extends to the A-end setting and the B-control range extends to the B-end setting.

In the A-control configuration, the second A-port is fluidically connected to the second AB-port and the second B-port is fluidically blocked. A second valve opening of the second sub-valve decreases, in particular monotonically decreases, with the control setting moving away from the A-end setting. In in the B-control range, the second B-port is fluidically connected to the second AB-port and the second A-port is fluidically blocked, The second valve opening decreases with the control setting moving away from the B-end setting.

In contrast to the first sub-valve that serves the mere purpose of switching, the second sub-valve serves for switching as well as continuous flow control. Switching is achieved by operating the second sub-valve alternatively in the A-control range or the B-control range. Continuous control is achieved by adjusting the setting within the A-control range or B-control range, respectively.

Further, the control valve is in a neutral configuration if the control setting is in a neutral range between the A-control range and the B-control range, wherein the neutral range is between and adjacent to the A-control range and the B-control range. A least three of the first A-port, the first B-port, the second A-port and the second B-port are fluidically blocked in the neutral configuration.

As discussed further below in more detail all four of the first A-port, the first B-port, the second A-port and the second B-port may in an embodiment be fluidically blocked in at least part of the neutral configuration. However, one of the A-ports or one of the B-ports may also be fluidically connected with the AB-port of the respective sub-valve for pressure relief in at least part of the neutral configuration.

As discussed in more detail further below, the first and second AB-port are in a typical HVAC application connected via a heat exchanger, typically in series with a flow sensor. Since both the A-port and the B-port are fluidically blocked for at least one on the first or second sub-valve in the neutral configuration respectively for a neutral control setting, it follows that no flow fluid flow through the heat exchanger and the flow sensor will occur in the neutral configuration.

The expression "configuration" refers to the fluidic configuration between the ports of each of the sub-valves in dependence of the position of the valve member in relation to the ports of the respective sub-valve. The fluidic connection respectively blocking depends on the position of the valve member respectively it's one or more fluidic passages, to the ports.

The configuration of each of the first and second sub-valve and of the control valve as a whole is uniquely determine by the control setting. Specifically, the first sub-valve is in the A-open configuration if the control setting is in the A-open range and is in the B-open configuration if the control setting is in the B-open range. Similarly, the second sub-valve is in the A-control configuration if the control setting is in the A-control range and is in the B-control configuration if the control setting is in the B-control range. For further configurations and ranges of the control setting, the same generally applies in an analogue manner.

As generally known in the art, the first and second sub-valve generally include in each case respective valve seats for movably bearing the valve member of the respectively sub-valve first and second valve member or valve member parts as discussed further below. Valve seats may have respective through-going valve seat passages for fluidic coupling with the ports.

As generally known in the art, the valve members have in each case at least one respective fluidic valve member passage. A valve member passage may permeate the respective valve member and extend in a through-going manner and in a straight or non-straight, for example curved or angled, manner. Further, a valve member passage may have a constant or varying cross section in accordance with the overall valve design and the required valve characteristics. Further, a valve member passage may generally be branched or non-branched. In embodiments as discussed in the present context in more detail, the valve member passages are non-branched. A valve member passage, however, may also be designed as recess or notch that extends from an outer surface of the respective valve member

The valve opening decreasing respectively increasing in dependence of the control setting generally refers to a global decreasing respectively increasing of the valve opening. Monotonically decreasing or increasing means that no local extrema are present in the valve opening as function of the control setting. With other words, for a monotonic increase respectively decrease, when in the A-control control range, the valve opening of the second sub-valve will not increase when moving the control setting away from the A-end setting. Similarly, when in the B-control range, the valve opening of the second sub-valve will in any case not increase when moving the control setting away from the B-end setting. Locals plateaus where the valve opening does not change within a certain range of the control setting may be present. In a typical design, however, no such local plateaus are present and the valve opening decreases respectively increases strictly monotonically with the control setting in the A-control range or B-Control range, respectively. In a particular design, the decrease respectively increase is linear or substantially linear. It is noted that a decreasing valve opening when moving into either direction implies an increasing valve opening when moving into the opposite direction, and vice versa.

Ranges being adjacent may be associated with an abrupt change of the range and accordingly a switch-like change in the configuration of the control valve or a sub-valve, respectively. Ranges and valve configurations, however, may also merge into each other in a smooth and continuous manner.

In an embodiment, the first sub-valve is in an A-sided transition configuration if the control setting is in an A-sided transition range and is in a B-sided transition configuration if the control setting is in a B-sided transition range. The A-sided transition range is adjacent to the A-open range and the B-sided transition range is adjacent to the B-open range. In the A-sided transition configuration, the first A-port is fluidically connected the first AB-port and the first B-port is fluidically blocked, wherein a first valve opening of the first sub-valve decreases with the control setting moving away from the A-end setting. In the B-sided transition configuration, the first B-port is fluidically connected the first AB-port and the first A-port is fluidically blocked, wherein the first valve opening of the first sub-valve decreases with the control setting moving away from the B-end setting.

In the transition configurations, the first sub-valve generally acts like a control valve with a continuously varying valve opening in dependence on the control setting. The slope of the valve opening in function of the control setting, however, is generally large as compared to the slope for the second sub-valve in the A-control range or B-control range respectively. Generally, the A-sided and B-sided transition range are not used for regulating the fluid flow of the first sub-valve but are favourable or inherently given for some designs.

In a particular embodiment with transition ranges, the first sub-valve is in an intermediate configuration if the control setting is in an intermediate range. The intermediate range is between and adjacent to the A-sided transition range and the B-sided transition range. The first valve opening may be substantially constant, in particular zero or substantially zero, in the intermediate range. A valve opening of zero is generally given if the first A-port and the first B-port are fluidically blocked. In case of a constant but non-zero valve opening in the intermediate configuration, the first valve member respectively it's at least one fluidic passage is designed such that a fluidic connection is given between the first AB-port and either the first A-port or the first B-port via a fluid passage of the first valve member. Such fluidic connection, however, has a small cross section respectively flow coefficient Cᵥ and serves for pressure relief purposes. The first valve opening is accordingly small in the intermediate configuration as compared to the A-open configuration and B-open configuration, respectively.

In a further embodiment, the valve opening is generally zero in the intermediate configuration respectively for the intermediate range. In part of the intermediate range, in particular for a center setting as discussed below, however, a fluidic pressure relief connection is foreseen between the first AB-port and either of the first A-port or the first B-port, e.g. via a dedicated pressure relive channel respectively pressure relief groove of the first valve member as discussed below.

In a further embodiment, the valve opening is zero in the intermediate range with the first A-port and the first B-port being fluidically blocked.

In a particular embodiment with intermediate range, the intermediate range coincides with the neutral range or is a sub-range of the neutral range. The intermediate range may in particular be a symmetrical sub-range of the neutral range. In particular, the intermediate range may be symmetrical with respect to a center setting as discussed below.

In an embodiment, the boundary between the A-open range and the A-sided transition range corresponds to the boundary between the A-control range and the neutral range. Similarly, the boundary between the B-open range and the B-sided transition range may correspond to the boundary between B-control range and the neutral range.

In an embodiment, the second valve opening is symmetrical or essentially symmetrical to a center setting and/or the A-control range and the B-control range may be symmetrical or essentially symmetrical to the center setting. The center setting may be symmetrical between the A-end setting and the B-end setting. The center setting may be in the neutral range, in particular in the middle of the neutral range, respectively the neutral range may be symmetrical to the center setting.

In an embodiment, the first valve opening is symmetrical or essentially symmetrical to the center setting respectively the A-open range and the B-open range are symmetrical or essentially symmetrical with respect to the center setting.

For the typical example of a rotatory actuator coupler with the control setting in an angular range of 90 degrees between the A-end setting and the B-end setting, the center setting may accordingly be at 45 degrees.

The control valve may in particular be controlled via a valve actuator to assume the center setting in situations where no fluid flow is desired respectively where a fluidic path between the first AB-port and the second AB-port via a heat exchanger as discussed above and further below shall be fluidically isolated. For fluidically isolating a heat exchanger, the control setting may in principle be any setting in the neutral range.

The expression "essentially" symmetrical is to be understood in the sense that some degree of asymmetry may be present but is generally negligible in application, in particular in an HVAC application. Apart from factors such as manufacturing tolerances, some minor asymmetry may especially be caused by a pressure relief connection or pressure relief feature as discussed further below.

In an embodiment, the first sub-valve and the second sub-valve are rotatory valves. The actuator coupler may be rotatably beared. Various types of rotatory valves are well known and widely used, e.g. in HVAC and other applications, and the first and second sub-valve may as such generally be designed accordingly. In other embodiments, however, other types of valve may be used for the first and/or second sub-valve. By way of example, either or both of the first and second sub-valve may be a (linear) sliding valve. The characterization of the valve type specifies the motion of the valve member with respect to the valve housing.

In some embodiments, physical stops may be present that limit the, e.g., rotatory a movement range a rotatory movement of the first and second valve member to a range as defined by the A-end setting and B-end setting, respectively. In other embodiments, however, no physical stops are resent and the first and second valve member are in principle continuously rotatable by any angle without hitting a stop.

While deviating designs are well possible, the type of movement of the actuator coupler between the A-end setting and the B-end setting typically corresponds to the type of movement of the first and second valve member. Consequently, for the first and second sub-valve being rotatory valves, the movement of the actuator coupler may also be rotatory. For the first and second sub-valve being (linear) sliding valves, the movement of the actuator coupler may also be linear sliding respectively displacement movement in a typical design.

In a particular embodiment with rotatory sub-valves, a coupler axis, a first valve member axis and second valve member axis coincide. This type of embodiment allows a number of favorable designs. Further, the control valve mainly extends along the coupler axis as main extension detection, while it may be compact otherwise, lateral to the coupler axis. The common coinciding axis is referred to as control valve axis.

In another embodiment with rotatory sub-valves, the coupler axis, the first valve member axis and the second valve member axis extend in each case parallel and offset to each other. For this type of embodiment, the first and second sub-valve may in particular be arranged next to each other in a side-by-side manner. The actuator coupler may extend between the first and second sub-valve. This type of embodiment is particularly favorable where the first and second valve member are coupled with the actuator via a first respectively second transmission device as discussed further below.

In an embodiment, the first sub-valve and the second sub-valve are ball valves. For the first and second sub-valve being ball valves, the first and second valve member are at least in part ball-shaped respectively have a spherical outer surface. This particularly holds true for the bearing surfaces and/or surfaces that contact the valve seats. Other portions may be non-spherical. In embodiments where the first and/or second valve member includes valve member parts as discussed further below, the respective valve member parts may in each case be at least in part ball-shaped respectively have a spherical outer surface.

In a particular embodiment with ball valves, the first valve member has a first valve member diameter and the second valve member has a second valve member diameter different from the first valve member diameter. In particular, the first valve member diameter may be larger than the second valve member diameter. A large first valve member diameter is in some designs favourable in the interest of small transition ranges.

In an embodiment, the first valve member and the second valve member are of identical or substantially identical design. The design being substantially identical refers in particular to an optional pressure relief feature at either of the valve members as discussed further below. For such embodiments, the different specific characteristics of the first and second sub-valve are generally achieved via a non-linear transmission device in the power flow from the actuator coupler to the first valve member as discussed further below in more detail, rather than via the fluidic design which is generally identical.

In an embodiment, a first valve member passage of the first valve member and a second valve member passage of the second valve member are differently designed. For such embodiments, the specific characteristics of the first and second sub-valve are realized, at least in part, via corresponding designs of the valve member passages. While not in any case necessary, the presence of transmission devices, such as gearboxes, between the actuator coupler and either or both of the first and second valve member is also possible.

In an embodiment, the actuator coupler, the first valve member and the second valve member are in each case formed integrally or are rigidly coupled with each other. For such type of embodiment, the first and second valve member move in case together and synchronously. The specific characteristics of the first and second sub-valve are accordingly realized via the valve member passages as mentioned before. In a particular embodiment, the actuator coupler is also formed integrally with or is rigidly coupled with the first and second valve member.

In an embodiment, the actuator coupler and the first valve member are coupled via a first transmission device. The first transmission device includes a non-linear transmission device. The non-linear transmission device may in particular be or include a Maltese cross mechanism or Geneva mechanism.

Generally, a transmission device as used in the present context has an input member that is actuated or driven, and an output member that is coupled to a load, in particular a valve member, with the power flow being from the input member to the output member. A transmission device may have one or more stages of identical or different design, with each stage having a respective input member and output member. The stages may in each case be linear or non-linear. A transmission device may be a gearbox.

A non-linear transmission device is a mechanism where the transmission characteristics, i.e. the e.g. rotational output member position of the output member in dependence of the e.g. rotational input member position of the input member, is non-linear. A large variety of functional and design principles is known in the art for non-linear transmission devices. In favorable embodiments, the non-linear transmission device has a highly non-linear transmission characteristic and may in particular be a mechanical switching device. For a mechanical switching device, the transmission characteristics comprises generally horizontal sections that are separated by a section of large and ideally infinite slope at a switching position. The output member - and accordingly also a thereto coupled load, e.g. valve member - will quickly and ideally abruptly move as the input member passes the switching potion, but maintain its position otherwise. As used in the context of the present disclosure, the switching is possible for both movement directions of the input member. Maltese cross mechanisms or Geneva mechanisms are typical and generally known representatives of such non-linear transmission devices. In an embodiment, the switching position corresponds to the center setting as discussed above. The non-linear transmission device, for example mechanical switching device, may form a stage of the first transmission device.

By the first transmission device being or including a non-linear transmission device as mentioned, an abrupt switching between the A-sided respectively B-sided open range in particular at a center setting, can be achieved without or negligee transition ranges.

In an embodiment, the first transmission device includes a speed-increasing transmission device. The speed-increasing transmission device may have a linear transmission characteristic and may be designed, e.g., as gearbox with toothed wheels. The speed-increasing transmission device may form one or more stages of the first transmission device. The speed-increasing transmission device may in particular be arranged in series with a non-linear transmission device. The speed-increasing transmission device may in particular be arranged in the power flow before the non-linear transmission device.

Via the combination of a speed-increasing transmission device and non-linear transmission device, in particular a mechanical switching device, the first valve member may not move in the A-open range B-open range, and may switch between them with small or negligible transition ranges.

In an embodiment, the actuator coupler and the second valve member are coupled via a second transmission device. The second transmission device may include a speed-reducing transmission device. The second transmission device may be present in addition to or alternatively to a first transmission device in order to adjust the movement speed of the second valve member as required. Further, a second transmission device may be present for geometrical reasons in particular if the second valve member is not coaxial with the actuator coupler in order to bridge the distance between the coupler axis and the second valve member axis as rotational axis of the second valve member. For generally the same reasons, the first transmission device may include a speed-reducing transmission device in an analogue manner.

In a particular embodiment with a second transmission device, the second transmission device includes a first stage in form of a speed-reducing transmission device and a second stage in form of a speed-increasing stage of identical ratio. In such design, the second transmission device serves the purpose of bridging an offset between the coupler axis and the second valve member axis while the second valve member will make the same rotational movement as the actuator coupler. Generally, speed-reducing and speed-increasing stages of the first as well as second transmission device may be realized as gearbox with, e.g., toothed wheels and/or toothed belts.

In an embodiment, the actuator coupler and the second valve member are formed integrally or are rigidly coupled with each other. For this type of embodiment, the first and second valve member may in particular be formed integrally or be rigidly coupled with each other, i.e. all of the actuator coupler, the first valve member and the second valve member are formed integrally or are rigidly coupled as mentioned before. Alternatively, the first valve member is coupled via a first transmission device as mentioned before. The first transmission device may in particular include a combination of a speed-increasing transmission device, e.g. a speed-increasing gearbox, and a non-linear transmission device as discussed before.

In an embodiment, the first valve member is permeated by a first valve member A-passage and by first valve member B-passage distinct from the first valve member A-passage. Alternatively or additionally, the second valve member may be permeated by a second valve member A-passage and by a second valve member B-passage, distinct from the second valve member A-passage.

For this type of embodiment of the first respectively second sub-valve, separate fluidic passages are foreseen for fluidically coupling the A-port respectively B-port with the AB-port of the respective sub-valve. Specifically, the first valve member A-passage may be configured for fluidically coupling the first A-port with the first AB-port, and the first valve member B-passage may be configured for alternatively fluidically coupling the first B-port with the first AB-port. Similarly, the second valve member A-passage may be configured for fluidically coupling the second A-port second with the second AB-port, and the second valve member B-passage may be configured for alternatively fluidically coupling the second B-port with the second AB-port. The first valve member A-passage and the first valve member B-passage may extend transverse and in particular orthogonally to each other. Similarly, the second valve member A-passage and the second valve member B-passage may extend transverse and in particular orthogonally to each other. Further, the first valve member A-passage and the second valve member A-passage may extend parallel to each other. Similarly, the first valve member B-passage and the second valve member B-passage may extend parallel to each other.

In an embodiment, the control valve further includes a valve actuator, wherein an output member of the valve actuator is coupled to the actuator coupler. The valve actuator may in particular a motorized rotatory actuator.

In an embodiment, one of the first A-port and the first B-port is fluidically connected with the first AB-port via a pressure relief connection in at least part of the neutral range.

Alternatively, one of the second A-port and the second B-port is fluidically connected with the second AB-port via the pressure relief connection in at least part of the neutral range. Outside the neutral range, no pressure relief connection is generally present.

The expression "pressure relief connection" refers to a fluidic connection that allows some amount of fluid flow to equalize a pressure difference between the ports that are connected via the pressure relief connection, respectively to allow releasing an overpressure. Such hydraulic pressure relief connection, however has a large fluidic resistance and is generally neither suited nor intended for a significant flow of a heat transport fluid.

The purpose and effect of such pressure relief connection is as follows: When using the control valve e.g. in a fluidic arrangement of an HVAC system with a heat exchanger as discussed further below, three mutually unconnected fluidic sections are generally present in the neutral configuration respectively for the control setting being in the neutral range as follows: Between the first and second A-port, between the first and second AB-port, and between the first and second B-port. In such arrangement, pressure equalization vessels are generally required. By way of a pressure relief connection as mentioned, however, it can be assured that some fluidic connection is present between either of the A-ports or B-ports and the respective AB-port. In such arrangement, pressure equalization vessels can be dispensed with. It is noted, however, that such pressure relief connection should be foreseen only at either of the first, or, alternatively, the second sub-valve. Further, it is present only at the A-port or, alternatively, the B-port of the respective sub-valve. The design feature that provides the pressure relief connection is also referred to as pressure relief feature.

The pressure relief feature may be realized in various ways. Example designs are disclosed in WO2015173071A1. This documents in particular discloses a pressure feature respectively pressure relief connection in form of a groove the surface of one of the said valve members. The groove may in particular be a concentric circular ring around an aperture of the first or second valve member passage. Such groove may provide a fluidic connection for pressure relief purposes independent of the valve member passage. Such design is in particular suited for the one of the first or second sub-valve if, e.g., the first and second sub-valve are in each case ball valves and the first and second valve member are generally identical designed and have in particular identically designed valve member passages. The groove results in the valve opening of the first or second sub-valve not being zero but having a small residual valve opening as determined by the cross section of the groove over at least part of the neutral range.

Alternatively, the pressure relief feature may be present in particular at the first valve member and be realized by way of a asymmetric design of the first valve member passage that ensures a fluidic coupling of the first valve member passage and either of the first A-port or the first B-port and the first AB-port for at least part of the neutral configuration respectively in at least part of the neutral range.

In a further aspect, the present disclosure concerns a fluidic arrangement. The fluidic arrangement includes a control valve in accordance with any embodiment as discussed above and/or further below. The fluidic arrangement further includes a heat exchanger. The heat exchanger may be fluidically arranged between the first AB-port and the second AB-port.

In an embodiment, the fluidic arrangement further includes a flow sensor. The flow sensor may be fluidically arranged between the first AB-port and the second AB-port in series with the heat exchanger. The flow sensor may in particular be an ultrasonic flow sensor.

In a further aspect, the present disclosure concerns an HVAC system. The HVAC system includes a fluidic arrangement according to any embodiment as discussed above and/or further below. The first A-port is fluidically coupled to an A fluid supply and the first B-port is fluidically coupled to a B fluid supply. In a particular design, either of the A fluid supply and the B fluid supply is a heating fluid supply and the other of the A fluid supply and the B fluid supply is a cooling fluid supply.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: an idealized valve characteristics of a first sub-valve and second sub-valve;
- Fig. 2: a first embodiment of a control valve in accordance with the present disclosure in a perspective view;
- Fig. 3: the control valve according to the first embodiment in a perspective sectional view;
- Fig. 4: the control valve according to the first embodiment in a further perspective sectional view in the A-end setting;
- Fig. 5: the control valve according to the first embodiment in a further perspective sectional view in the A-end setting;
- Fig. 6: the control valve according to the first embodiment in a further perspective sectional view in the A-end setting;
- Fig. 7: the control valve according to the first embodiment in a further perspective sectional view in the A-end setting;
- Fig. 8: the control valve according to the first embodiment in a view generally corresponding to Fig. 4, but with a valve setting rotated by 30°;
- Fig. 9: the control valve according to the first embodiment in a view generally corresponding to Fig. 5, but with a valve setting rotated by 30°;
- Fig. 10: the control valve according to the first embodiment in a view generally corresponding to Fig. 6, but with a valve setting rotated by 30°;
- Fig. 11: the control valve according to the first embodiment in a view generally corresponding to Fig. 7, but with a valve setting rotated by 30°;
- Fig. 12: the control valve according to the first embodiment in a view generally corresponding to Fig. 4, but in a center setting;
- Fig. 13: the control valve according to the first embodiment in a view generally corresponding to Fig. 5, but in a center setting;
- Fig. 14: the control valve according to the first embodiment in a view generally corresponding to Fig. 6, , but in a center setting;
- Fig. 15: the control valve according to the first embodiment in a view generally corresponding to Fig. 7, , but in a center setting;
- Fig. 16: a second embodiment of a control valve in accordance with the present disclosure in a perspective view;
- Fig. 17: the control valve according to the second embodiment in a perspective sectional view;
- Fig. 18: a third embodiment of a control valve in accordance with the present disclosure in a perspective view;
- Fig. 19: the control valve according to the third embodiment in an exploded perspective view;
- Fig. 20: the control valve according to the third embodiment in a sectional view in the A-end setting;
- Fig. 21: the control valve according to the third embodiment in a further sectional view in the A-end setting;
- Fig. 22: the control valve according to the third embodiment in a further sectional view in the A-end setting;
- Fig. 23: the control valve according to the third embodiment in a further sectional view in the A-end setting;
- Fig. 24: the control valve according to the third embodiment in a view generally corresponding to Fig. 22, but with a valve setting rotated by 30°;
- Fig. 25: the control valve according to the third embodiment in a view generally corresponding to Fig. 23, but with a valve setting rotated by 30°;
- Fig. 26: the control valve according to the third embodiment in a view generally corresponding to Fig. 22, but in the center setting;
- Fig. 27: the control valve according to the third embodiment in a view generally corresponding to Fig. 23, but in the center setting;
- Fig. 28: an enlarged detail in the view of Figure 26;
- Fig. 29: a fourth embodiment of a control valve in accordance with the present disclosure in a perspective view;
- Fig. 30: parts of the control valve according the fourth embodiment in an exploded perspective view;
- Fig. 31: a fifth embodiment of a control valve in accordance with the present disclosure in a perspective view;
- Fig. 32: the control valve according to the fifth embodiment in a view similar to Figure 31, but upside down;
- Fig. 33: the first and second transmission device of the control valve according to the fifth embodiment in the A-end setting;
- Fig. 34: the first and second transmission device of the control valve according to the fifth embodiment, but with a valve setting rotated by 30° as compare to Figure 33;
- Fig. 35: the first and second transmission device of the control valve according to the fifth embodiment, but with a valve setting rotated by 60° as compare to Figure 33;
- Fig. 36: the first and second transmission device of the control valve according to the fifth embodiment, but with a valve setting rotated by 90° as compare to Figure 33, respectively in the center setting;
- Fig. 37: a modification for the first and second embodiment with a pressure relief feature.

### DESCRIPTION OF THE EMBODIMENTS

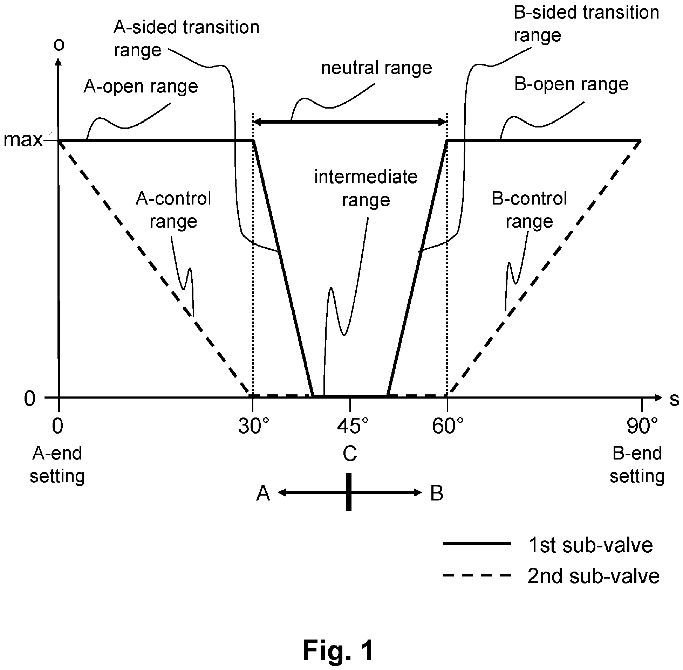

In the following, reference is first made to **Figure 1**, illustrating the valve characteristics of an exemplary 6-way control valve in accordance with the present disclosure. Specifically, the valve opening o is shown as a function of the control setting s separately for the first sub-valve (solid line) and the second sub-valve (dashed line). In the shown design, the total range of the exemplarily rotatory control setting is 90 degrees, with the A-end setting at 0° and the B-end setting at 90°. The possible travel range of an actuator coupled to the actuator coupler should accordingly also be at least 90°. It is noted that mechanical stops at the A-end setting and B-end setting may or may not be present in dependence of the design of control valve respectively the first and second sub-valve. In the middle between the A-end setting and the B-end setting, i.e. at 45° for the shown example, is a center setting C. In the shown example, the valve characteristics of both the first sub-valve and the second sub-valve are symmetrical respectively substantially symmetrical to the center setting C.

Generally, for the first sub-valve, a non-zero valve opening means that a fluidic connection is present between the first A-port and the first AB-port while the first B-port is fluidically blocked, if the control setting s is between the A-end setting and the center setting C. If the control setting s is between the B-end setting and the center setting C, it means that a fluidic connection is present between the first B-port and the first AB-port, while the first A-port is fluidically blocked. For the second sub-valve , a non-zero valve opening means that a fluidic connection is present between the second A-port and the second AB-port while the second B-port is fluidically blocked, if the control setting s is between the A-end setting and the center setting C. If the control setting s is between the B-end setting and the center setting C, it means that a fluidic connection is present between the second B-port and the second AB-port, while the second A-port is fluidically blocked.

Regarding the first sub-valve, the fluid path between the first A-port and first AB-port is fully open or substantially fully open in an A-open range, with the first B-port being blocked in the A-open range. Similarly, the fluid path between the first B-port and first AB-port is fully open or substantially fully open in a B-open range, with the first A-port being blocked in the B-open range. An intermediate range where both the first A-port and the first B-port are in principle fluidically blocked (see, however, optional pressure relief as discussed further below) is arranged symmetrically with respect to the center setting C.

In the shown example, an A-sided transition is present with respect to the control setting s between the A-open range and the intermediate range and B-sided transition range is present between the B-open range and the intermediate range.

Regarding the second sub-valve, its valve opening decreases, exemplarily in a linearly or substantially linearly manner, in an A-control range, when moving away from the A-end setting towards the center setting C and the B-end setting. Similarly, it decreases in generally the same way in a B-control range when moving away from the B-end setting towards the center setting C and the A-end setting. At the A-end setting, the second sub-valve is fully open respectively the valve opening is maximal, with a through-going fluidic passage between the second A-port and the second AB-port. Similarly at the B-end setting, the second sub-valve is fully open respectively the valve opening is maximal with a through-going fluidic passage between the second B-port and the second AB-port.

When moving the control setting s from either of the A-end setting or the B-end setting towards the setting C, the valve opening decreases as mentioned. In a neutral range that may extend symmetric with respect to the center setting C, the valve opening of the second sub-valve is generally zero. In the shown example, the neutral range extends from 30° to 60° for the control setting s, with the center setting C being at 45°.

In the shown example, the boundary of the A-open range with the A-sided transition range corresponds to the boundary of the A-control range and the neutral range. Similarly, the boundary of the B-open range and the B-sided transition range corresponds to the boundary of the B-control range and the neutral range. Other designs, however, may also be used.

Further in the shown example, the intermediate range in which the valve opening of the first sub-valve is generally zero respectively where no fluid flow is possible through the first sub-valve is smaller than the neutral range and is a symmetric sub-range thereof.

It is noted that in the shown example, when moving the valve setting form either of the A-end setting or B-end setting towards the center setting C, the valve opening of the second sub-valve is zero at the transition of the first A-open range to the A-sided transition range and at the transition from the B-open range to the B-sided transition range.

It is noted that, in dependence of the design of the control valve as discussed above and further below, the first valve member of the first sub-valve and the second valve member of the second sub-valve may move synchronously or asynchronously and with different speeds. In particular, the first valve member may not move in the A-open range and B-open range, respectively.

Further it is noted that **Figure 1** does not reflect the effect of a pressure relief feature. Deviations due to a pressure relief feature are discussed further below in the context of the detailed description of particular embodiments.

As discussed in more detail further below, the first AB-port and the second AB-port are fluidically connected via fluidic components such as heat exchanger, resulting in a serial fluidic arrangement of the first and second sub-valve. Therefore, no fluidic flow (apart from pressure relief) occurs in the neutral range respectively for the control valve being in the neutral configuration. As a consequence, the A-sided and B-sided transition ranges are not used for controlling the fluid flow and the exact course of the valve opening in dependence of the control setting is not decisive from a functional point of view.

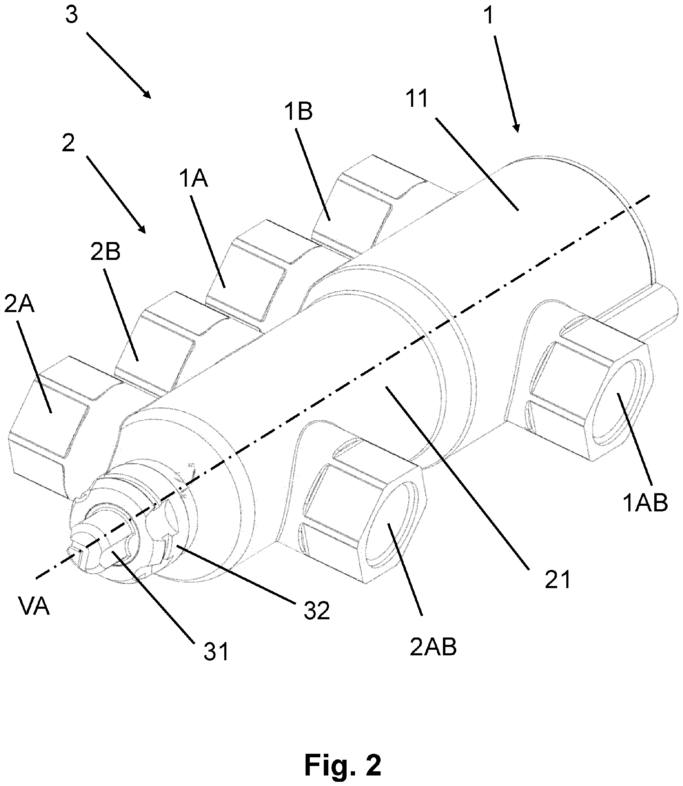

In the following, reference is additionally made to **Figure 2. Figure 2** shows a first exemplary embodiment of a control valve 3 with a valve characteristics according to **Figure 1** in a perspective view.

In the design of the control valve 3 according to **Figure 2**, the first sub-valve 1 has a first sub-valve housing 11 and the second sub-valve 1 has a second sub-valve housing 21. The first sub-valve housing 11 and the second sub-valve housing 21 are in this design formed integrally with each other, which, however is not essential. The first sub-valve housing 11 and the second sub-valve housing 21 are in this design in each case generally tubular and arranged one after the other in a concentrically manner. Further, the control valve 3 has an actuator coupler 31 in form of a shaft that is rotatably beard and projects out of a stub 32. In the shown design, a coupler axis of the actuator coupler 31 coincides with the valve member axes of the valve members (not visible in **Figure 1**) of the first and second sub-valve in a common control valve axis VA. Further, the control valve axis VA is also an axis of symmetry of the first sub-valve housing 11 and the second sub-valve housing 21. In this design, the stub 32 is an integrally formed extension for the second sub-valve housing 21 and serves the purpose of attaching a valve actuator. In a configuration where the control valve 3 is coupled with a valve actuator, the actuator coupler 31 is coupled with a rotatable output member of the valve actuator in a rotationally locked manner. A change of the control setting s between the A-end setting and the B-end setting corresponds to a rotation of the actuator coupler 31 by 90°.

In the shown design, the first A-port 1A and the first B-port 1B of the first sub-valve 1 are together with the second A-port 2A and the second B-port 2B of the second sub-valve 2 arranged one after the other distributed along the control valve axis VA and with an in each case common rotational orientation. The first AB-port 1AB of the first sub-valve 1 and the second AB-port 2AB of the second sub-valve 2 are on the opposite side with respect the coupler axis respectively the control valve axis VA. Further, the first AB-port 1AB is in this design arranged symmetrically between the first A-port 1A and the first B-port 1B, while the second AB-port 2AB is arranged symmetrically between the second A-port 2A and the second B-port 2B along the control valve axis VA. Other arrangements, however, are possible as well. Like in other embodiments discussed further below, all ports are exemplarily design for a fluidic connection by way of screw fittings.

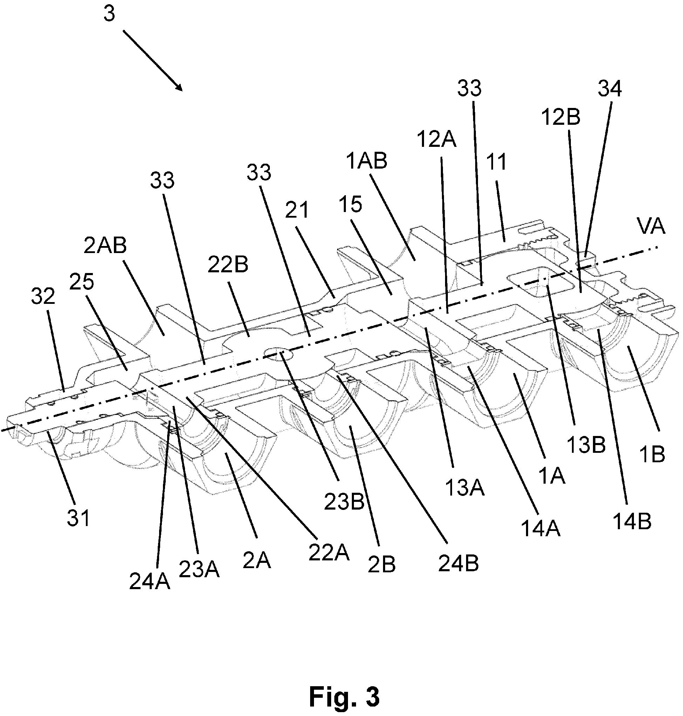

In the following, reference is additionally made to **Figure 3**. **Figure 3** shows the control valve 3 of **Figure 2** in a sectional view, with the sectional plane extending symmetrically through the control valve axis VA and bisecting all of the ports. As compared to the view of **Figure 2**, the control valve 3 is shown in **Figure 3** rotated by 180 degrees with respect to control valve axis VA.

The valve members of the first sub-valve and the second sub-valve are in this design in each case split into two parts. Specifically, the first valve member of the first sub-valve 1 is split into a first valve member A-part 12A and a first valve member B-part 12B. Similarly, the second valve member of the second sub-valve 2 is split into a second valve member A-part 22A and a second valve member B-part 22B. The outer surface of the valve member parts 12A, 12B, 22A, 22B is in each case partly spherical. Further, all valve member parts 12A, 12B, 22A, 22B are formed integrally with each other and the actuator coupler 31 as well as connecting shafts 33 which are in this case arranged between neighboring valve member parts. As a consequence, all of the valve member parts 12A, 12B, 22A, 22B will rotate together with the actuator coupler 31 in a synchronous manner. The first valve member A-part 12A and the first valve member B-part 12B are in this design generally identical, where not stated differently. The same holds true for the second valve member A-part 22A and the second valve member B-part 22B, respectively. Therefore, major characteristics and design features generally apply in the same manner for the A-part and the B-part of the first respectively second-sub-valve. An open end of the second sub-valve housing 22 is closed by way of a screwed-in valve cap 34.

The valve member parts 12A, 12B, 22A, 22B are in each case permeated by a separate fluidic passage as follows: The A-part 12A of the first valve member is permeated by a first valve member A-passage 13A and the B-part 12B of the first valve member is permeated by a first valve member B-passage 13B. Similarly, the A-part 22A of the second valve member is permeated by a second valve member A-passage 23A and the B-part 22B of the second valve member is permeated by a second valve member B-passage 23B. The first valve member A-passage 13A and the first valve member B-passage 13B are generally designed identical. Similarly, the second valve member A-passage 23A and the second valve member B-passage 23B are generally designed identically, but different from the first valve member A-passage 13A and first valve member B-passage 13B, as discussed further below in more detail.

Further, the first valve member A-passage 13A and the second valve member A-passage 23A have in a case a common extension direction. Similarly, the first valve member B-passage 13B and the second valve member B-passage 23B have in each case a common extension direction, different from the extension direction of the first valve member A-passage 13A and the second valve member A-passage 23A. In the shown design, the first valve member B-passage 13B and second valve member B-passage 23B are rotated in relation to the first valve member A-passage 13A and second valve member A-passage 23A by 90°, corresponding to the rotational angle between the A-end setting and the B-end setting, around the control valve axis VA. In the configuration shown in **Figure 3**, the first A-port 1A is fluidically coupled with the first AB-port 1AB via the first valve member A-passage 13A, and the second A-port 2A is fluidically coupled with the second AB-port 2AB via the second valve member A-passage 23A, with the opening width of the first sub-valve 1 and the second sub-valve 2 being in each case maximal.

The first valve member B-passage 13B and the second valve member B-passage 23B, in contrast are fluidically blocked. This configuration corresponds to the A-end setting. By rotating the actuator coupler 31 by 90 degrees, the control valve 3 can be brought into the alternative B-end setting.

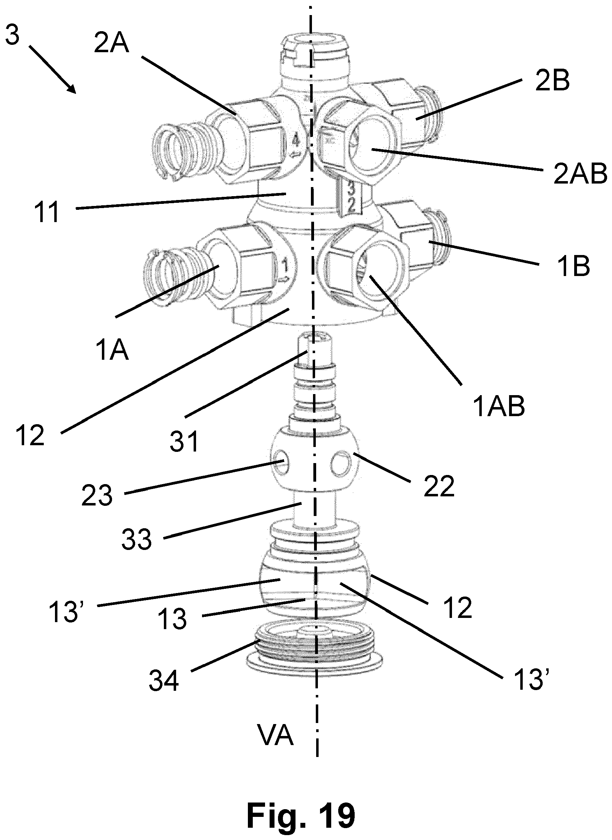

Further, a first A-port valve seat 14A is provided at the first A-port 1A and a first B-port valve seat 14B is provided at the first B-port 1B. Similarly, a second A-port valve seat 24A is provided at the second A-port 2A and a second B-port valve seat 24B is provided at the second B-port 2B. Each of the valve seats 14A, 14B, 24A, 24B has an axially through-going fluidic passage (not referenced in **Figure 3**) for fluidically sealed coupling as generally known. The first A-port valve seat 14A sealingly contacts the first valve member A-part 12A and the first B-port valve seat 14B sealingly contacts the first valve member B-part 12B. Similarly, the second A-port valve seat 24A sealingly contacts the second valve member A-part 22A and the second B-port valve seat 24B sealingly contacts the second valve member B-part 22B. The valve seats are generally mounted via an arrangement of sealings, e.g. O-ring sealings, washers and retention rings as generally known in the art (not referenced, best visible, e.g., in **Figure 19**).

The first AB-port 1AB opens into a first coupling passage 15 that can fluidically connect the first A-port 1A with the first valve member A-passage 13A or alternatively the first valve member B-passage 13B in dependence of the control setting. Similarly, the second AB-port 2AB opens into a second coupling passage 25 that can fluidically connect the second A-port 1A with the second valve member A-passage 23A or alternatively the second valve member B-passage 23B in dependence of the control setting s. The coupling passages 15, 25 extend in each case parallel to the control valve axis VA.

With reference to following figures, operation of the control valve 3 according to the embodiment of **Figures 2****,** **3** as well as particular design features are described in more detail.

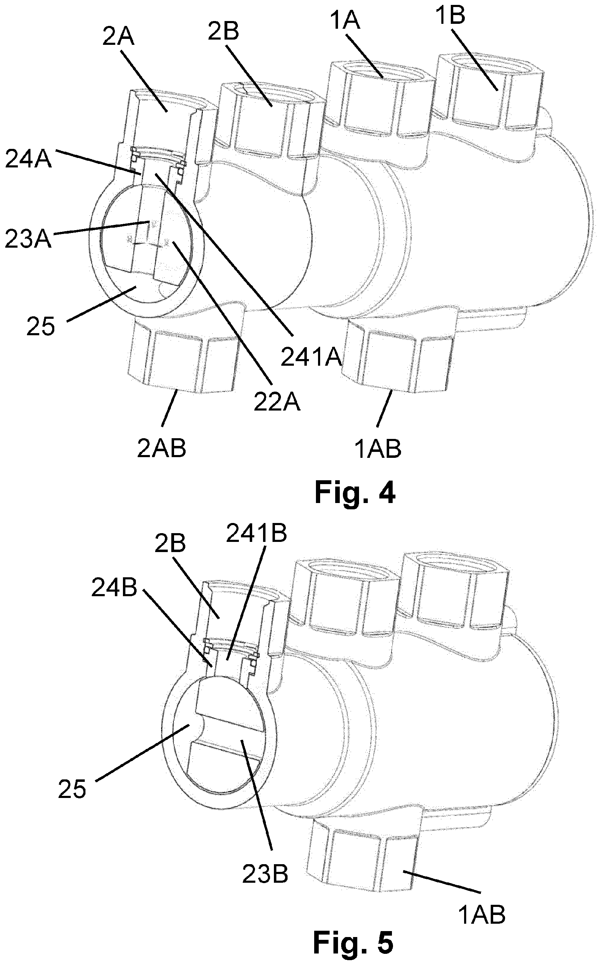

**Figure 4** shows the control valve in a sectional view, with the sectional plane being perpendicular to the control valve axis VA and bisecting the second valve member A-part 22A and the second A-port 2A. The control setting is, as in **Figure 3**, the A-end setting. In this configuration, the second A-port valve seat passage 241A that extends through the second A-port valve seat 24 is aligned with the second valve member A-passage 23A, which in turn is fluidically coupled via the second coupling passage 25 with the second AB-port AB. Further, the second A-port valve seat passage 241A and the second valve member A-passage 23A have identical or substantially identical cross sections, in particular circular cross sections. Consequently, if the control setting is somewhat changed and the second valve member A-part 22A is rotated, the fluidic path between the second A-port 2A and the second AB-port 2AB will be continuously constricted at the interface of the second A-port valve seat passage and 241A and the second valve member A-passage 23A, thereby reducing the opening width of the second sub-valve 2, corresponding to the A-control range.

**Figure 5** shows for the A-end setting a sectional view that bisects the second valve member B-part 22B and the second B-port 2B. It can be seen that the second valve member B-passage 23B extends transverse to the second B-port 2B and the second B-port valve seat passage 241B. Therefore, the second B-port 2B is fluidically blocked due to the sealing contact of the second B-port valve seat 24B and the second valve member B-part 22B.

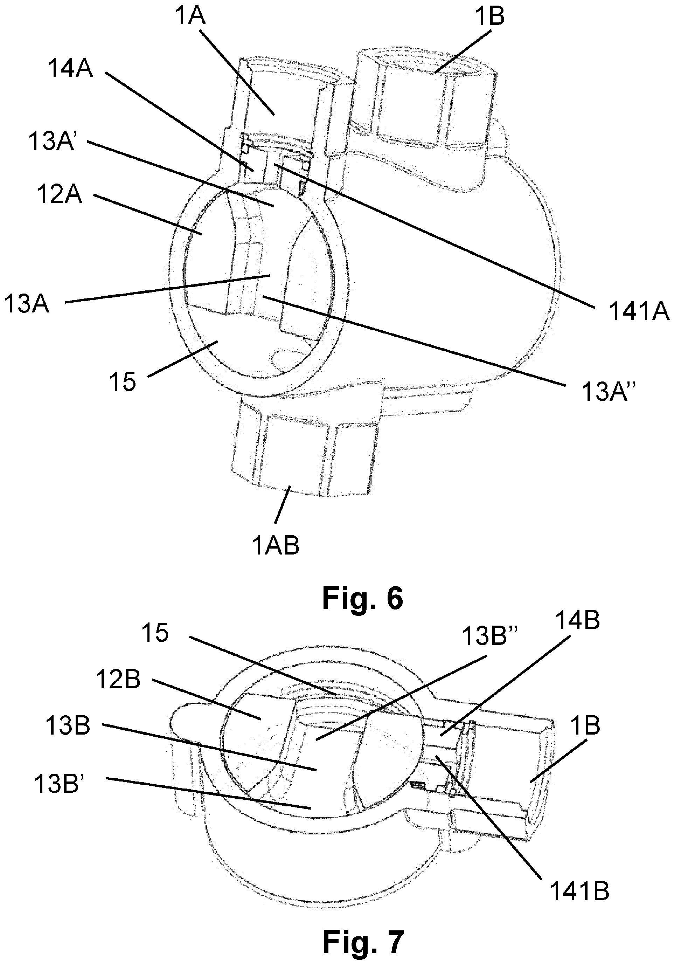

**Figure 6** shows for the A-end setting a sectional view that bisects the first valve member A-part 12A and the first A-port 1A. The first A-port valve seat 14A has a first A-port valve valve seat passage 141 with an exemplarily rectangular or square cross section. The first valve member A-passage 13A has also a rectangular or square cross section which, however, is different from the cross section of the first A-port valve seat passage 141 and varies over the length of the first valve member A-passage 13A as explained in the following. The first valve member A-passage 13A has a first portion 13A' with a wide opening at the surface of the first valve member A-part 12A and continuously narrows in a funnel-shaped manner into a second portion 13A" of in this design constant cross section. The second portion 13A" of the first valve member A-passage 13A extends to the surface of the first valve member A-part 12A, thereby fluidically coupling to the first AB-port 1AB via the first coupling passage 15.

The characteristics of the first sub-valve as switching valve mainly result from the design and interaction of the first A-port valve seat passage 141A and the first valve member A-passage 13A. The cross section of the opening of the first portion 13A' of the first valve member A-passage 13A is wider as compared to the cross section of the adjacent first A-port valve seat passage 141A. Consequently, if the control setting s is somewhat changed and moved away from the sown A-end setting and the first valve member A-part 12A is rotated, the opening of the first portion 13A' of first valve member A-passage 13A will continue to fully cover the adjacent opening of the first A-port valve seat passage 141A and the and the first sub-valve accordingly remains fully open. This corresponds to the A-open range. Closing of the first sub-valve 1 occurs in a A-sided transition range as first A-port clave seat passage 141A is no longer fully covered by the adjacent opening of the first portion 13A' of first valve member A-passage 13A.

**Figure 7** shows for the A-end setting a sectional view that bisects the first valve member B-part 12B and the first B-port 1B. It can be seen that the first B-port 1B is blocked by the first valve member B-part 12B. As the first valve member B-part 12B rotates, the first B-port will remain blocked as long as opening of the first portion 13B' the first valve member B-passage 13B does not overlap with the adjacent opening of the first B-port valve seat passage (141B) 141A of the first B-port valve seat passage 141B.

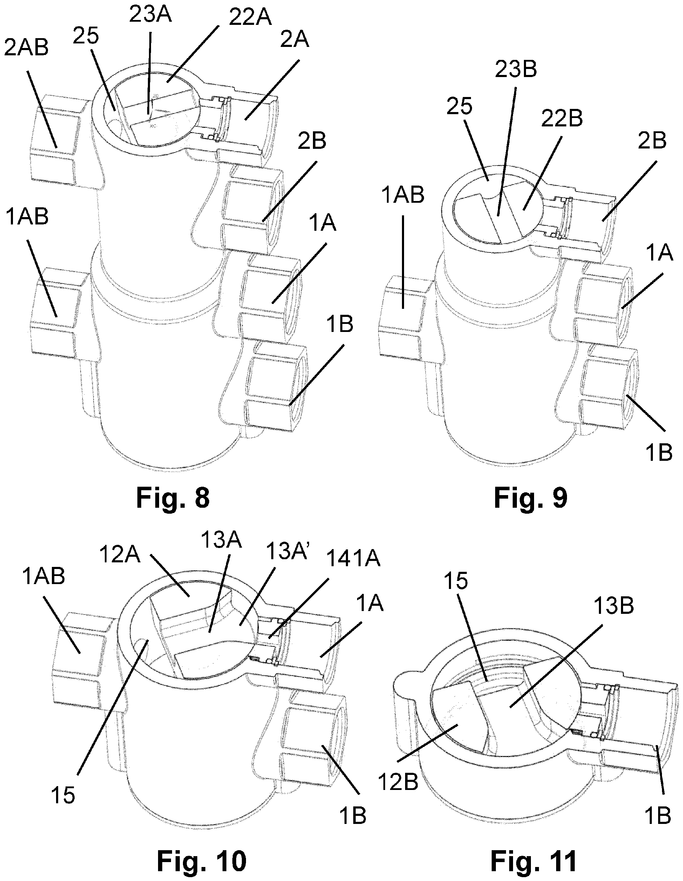

**Figures 8, 9, 10, 11** show the same sectional views as **Figures 4, 5****,** **6, 7** with the actuator coupler 31 having been rotated by 30° form the A-end setting towards the B-end setting. As shown in **Figure 8**, the second A-port 2A is now fluidically blocked by the second valve member A-part 22A in contrast to the configuration shown in **Figure 4**. As shown in **Figure 9**, the second B-port 2B is still fluidically blocked by the second valve member B-part 22B, like in the configuration shown in **Figure 5**. As shown in **Figure 10**. the first A-port 1A is still fluidically coupled with the first AB-port 1AB via the first valve member A-passage 13A and the first coupling passage 15, like in the configuration shown in **Figure 6**. Note, however, that an edge of the first valve member A-passage 13A is aligned with an edge of the first A-port valve seat passage 141A. Further rotation of the first valve member A-part 12A in counter-clockwise direction will accordingly result in the first A-port 1AB successively closing. Because the width respectively extension of the first A-port valve seat passage 141A in circumferential direction is comparatively small as compared to the opening of the first portion 13A' of first valve member A-passage 13A, the change from the configuration as shown in **Figure 10** to a full blockage of the first A-port 1A will take place over a small rotational angle, corresponding to the A-sided transition range. As shown in **Figure 11**, the first B-port 1B is still fluidically blocked by the first valve member B-part 12B.

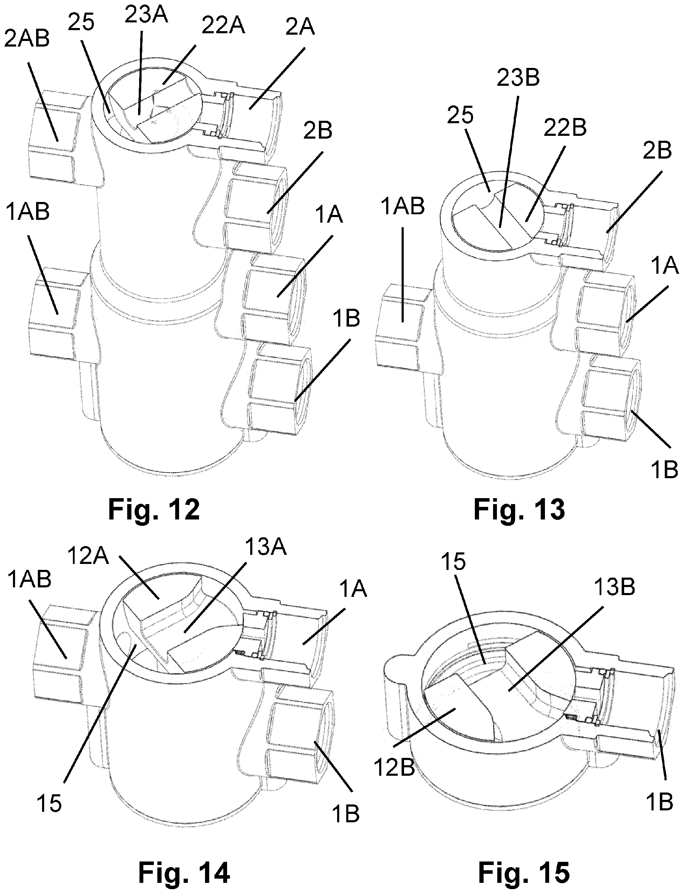

**Figures 12, 13, 14, 15** illustrate the situation after a further rotation of the actuator coupler 31 by 15° into the center setting C: It can be seen that in the center setting C, all of the ports 1A, 1B, 2A, 2B are fluidically blocked.

For the further rotation of the actuator coupler form the center setting C to the B-end setting at 90° via the 60° setting, the behavior is generally mirror-symmetrical to the rotation from the A-end setting at 0° to the center setting via the 30° as discussed before, with the roles of the A-ports and B-ports for the first and second sub-valve, however, being reversed. For a control setting s of 60°, the configuration will correspond to the configuration as shown in **Figures 8, 9, 10, 11**, but with the second A-port 2A and second B-port 2B being fluidically blocked, while the first A-port 1A is fluidically blocked and the first B-port 1B is fluidically coupled with the first AB-port 1AB. For B-end setting at 90°, the configuration will correspond to the configuration as shown in **Figures 4, 5****,** **6, 7**, but with the first B-port 1B being fluidically coupled with first AB-port 1AB and the first A-port 1A being fluidically blocked. The second B-port 2B is fluidically coupled with the second AB-port 2AB with maximal valve opening, while the second A-port 2A is fluidically blocked.

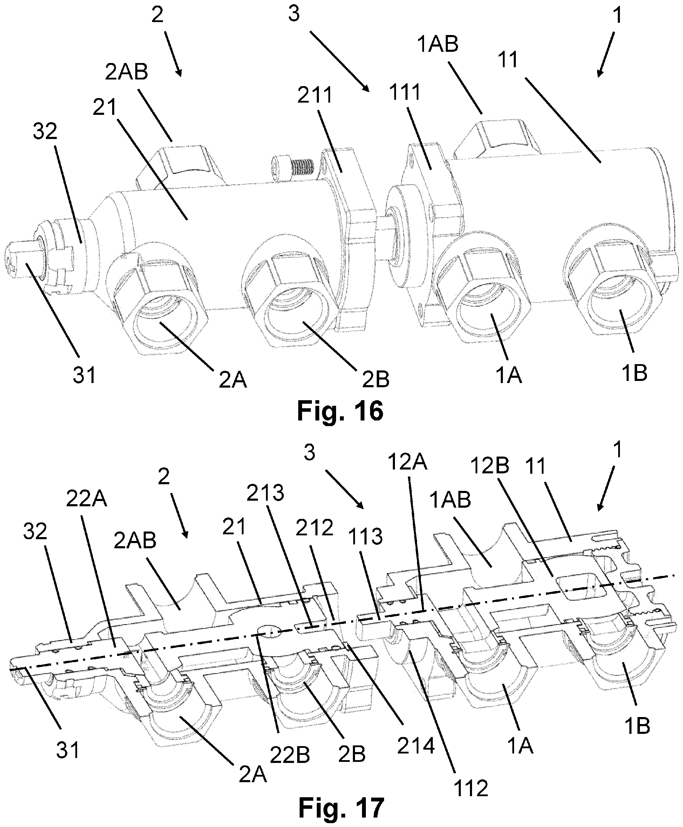

**Figure 16** and **Figure 17** show a second exemplary embodiment of the control valve 3. In many aspects and in particular regarding the fluidic design, this embodiment corresponds to the first embodiment and these aspects are therefore not further discussed. **Figure 16** shows a perspective view, generally similar to **Figure 2**, and **Figure 17** shows a perspective sectional view similar to **Figure 3**. In contrast to the first embodiment, the first sub-valve housing 11 of the first sub-valve 1 and the second sub-valve housing 21 of the second sub-valve 21 are not formed integrally with each other. Instead, the first sub-valve 1 and the second sub-valve 2 are structurally distinct and fluidically separate. Such design is advantageous regarding manufacture.

For coupling the first sub-valve 1 and the second sub-valve 2, the first sub-valve housing 11 has a first valve coupling flange 111 at one of its axial ends and the second sub-valve housing 21 has a second valve coupling flange 211. The valve coupling flanges 111, 211 are exemplarily designed for mutually mounting by way of screws. Note that the first sub-valve 1 and the second sub-valve 2 are for clarity reasons shown in an aligned but axially spaced apart configuration.

Further, the first sub-valve housing has a substantially cylindrical valve coupling stub 112 that projects from the first valve coupling flange 111 towards the second sub-valve 2 and the second valve coupling flange 211 has a corresponding valve coupling receptacle 212 that is configured to receive the valve coupling stub 212. The interaction of the valve coupling stub 112 and the valve coupling recess 212 ensures a correct and in particular centered assembly. At the ground of the valve coupling receptacle 212, a retaining ring 214 is foreseen for axially locking keeping the elements within the second-sub-valve housing 21, specifically the second valve member A-part 22A and the second valve member B-part 22B.

For the rotational coupling and for transmitting torque from the actuator coupler 31 to the first valve member A-part 12A and the first member valve part 12B, a valve member coupling receptacle 213 of exemplarily square cross section is foreseen at the second valve member B-part 22B. The valve member coupling receptacle 213 opens into respectively is an axial extension of the valve coupling receptacle 212. Further, the first valve member A-part 12 A is axially extended into a valve member coupling shaft 113 with a cross section corresponding to the valve member coupling receptacle 213. When coupling the first sub-valve 1 and the second sub-valve 2, the valve member coupling shaft 113 is received in the valve member coupling receptacle 213 in a rotationally locked manner. It is noted that the square cross section for the valve member coupling shaft 113 and the valve member coupling receptacle 213 is not essential, and other non-circular cross sections such as elliptical, hexagonal or star-shaped are possible as well.

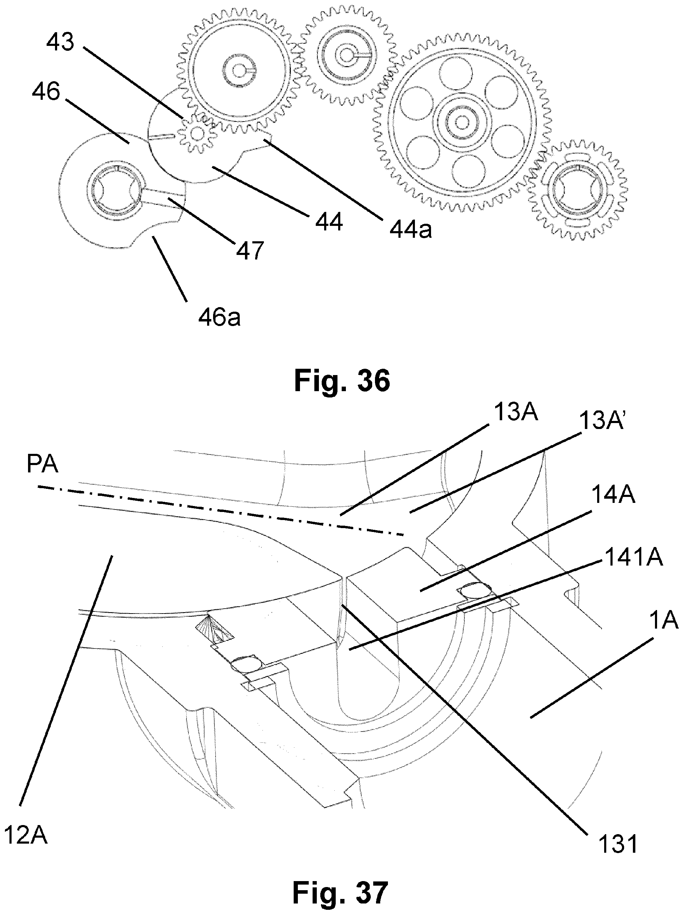

**Figure 37** illustrates a modification of the first or second embodiment. **Figure 37** shows a detailed view of the configuration of the first valve member A-part 12A for the center setting C (see also **Figure 14**). As compared to the before-discussed embodiments and specifically the configuration shown in **Figure 14**, the first valve member A-passage 13A, specifically its first portion 13A' is in radial direction somewhat asymmetrical to the longitudinal passage axis PA and the first valve member A-passage 13A. Consequently, a fluidic pressure relief connection 131 is present for the center setting C between first a port 1A and the first AB-port 1AB (not visible in **Figure 37**) via first valve member A-passage 13A. The pressure relief connection 131 serves as pressure relief feature. The first B-port 1B, in contrast, is fluidically blocked by the first valve member B-part 12B as discussed above. For the design according to **Figure 37**, the slope of the valve opening will be somewhat smaller as compared to **Figure 1**, with the pressure relief connection 131 being active and according some small valve opening being present in the center setting C.

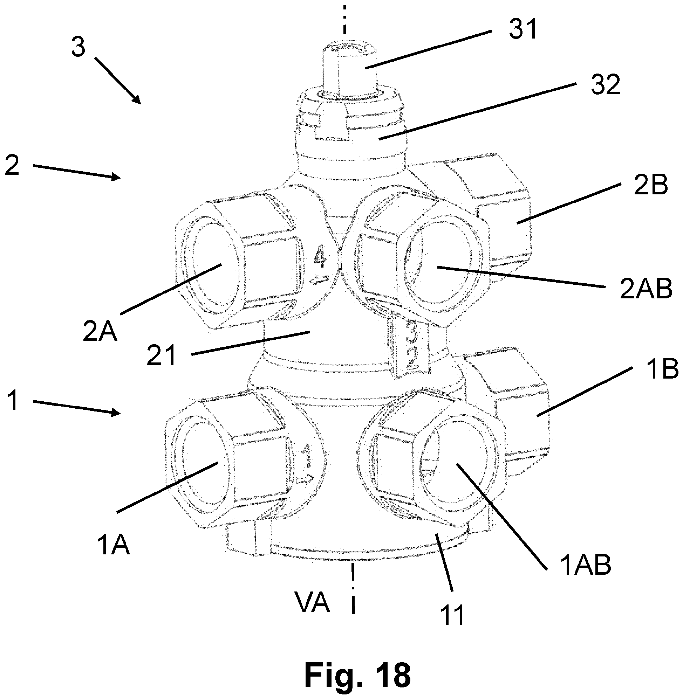

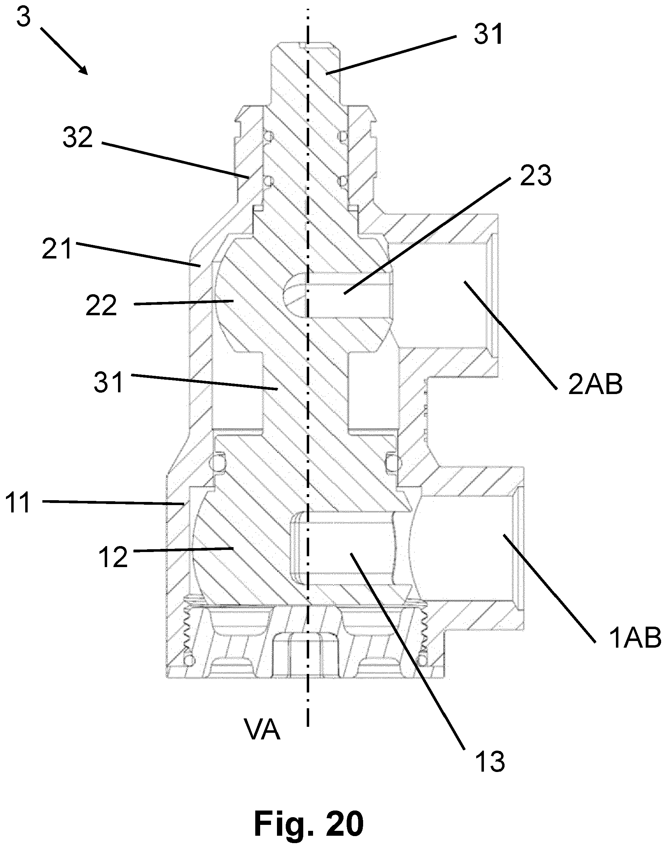

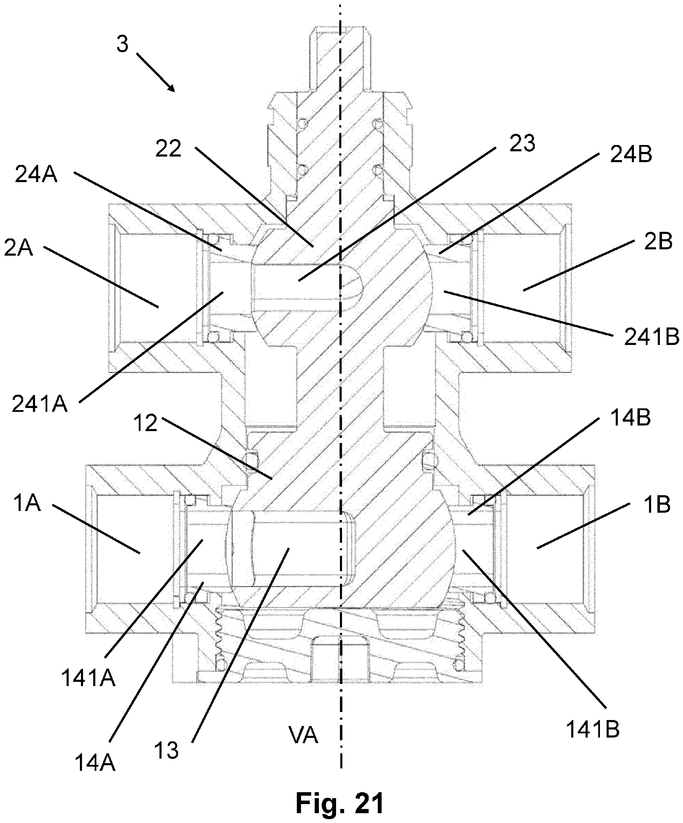

**Figure 18** shows a third exemplary embodiment of a control valve 3 in a perspective view, **Figure 19** shows a perspective exploded view. **Figure 20** and **Figure 21** show in each case a sectional view in the A-end setting, with the control valve axis VA laying in each case in the sectional plane. In **Figure 20**, the sectional plane further bisects the first AB-port 1AB and the second AB-port 2AB. In **Figure 21**, the sectional plane bisects the first and second A-port 1A, 1B as well as the first and second B-port 2A, 2B.

The design of the third embodiment is similar to the first embodiment in that the first valve member 12 of the first sub-valve 1 and the second valve member 22 of the second sub-valve 2 are arranged axially one after the other and are further rigidly coupled or alternatively formed integrally to follow a rotation of the actuator coupler 31 together and synchronously. Also, like in the first embodiment, the first sub-valve housing 11 of the first sub-valve 1 and the second sub-valve housing 21 of the second sub-valve 2 are formed integrally with each other.

In the third embodiment of the control valve 3, the first A-port 1A and the second A-port 1B are arranged opposite to each other and coaxially along a common axis transverse to the control valve axis VA. The first AB-port 1B is arranged symmetrically between the first A-port 1A and first B-port 1B. In a viewing direction along the control valve axis VA, the first A-port 1A, the first B-port 1B and the first AB-port 1AB have accordingly a T-configuration. The same holds true for the second A-port 2A, the second B-port 2B and the second AB-port 2AB in an analogue manner.

In this design, the first valve member 12 and the second valve member 22 are, as such, not split as in the before-discussed embodiments. Also, the first valve member 12 has a single first valve member passage 13 and the second valve member 22 has a single second valve member passage 23. The first valve member 12 and the second valve member 22 are in each case ball valve members that are connected via connecting shaft 33. In this design, the actuator coupler 31, the second valve member 22, the connecting shaft 33 and the first valve member 12 are integrally formed.

The second valve member passage 23 permeates the second valve member 22 and is, in a viewing direction along the control valve axis VA, generally L-shaped, with the legs of the L meeting at the control valve axis VA. The second sub-valve 2 may, as such, be designed as a three-way continuous control valve as generally known in the art.

The first valve member passage 13 has, in contrast to the second valve member passage 23, no distinct openings into the outer valve member surface, but is realized as a recess that cuts out a "pie slice" shaped sector of the first valve member 12, with the radial delimitations 13' meeting at the control valve axis VA. The sector angle is somewhat smaller than 180 degrees. By optionally foreseeing eccentric fixed apertures respectively, orifice, e.g. orifice plates, however, angles larger 180 degrees can be realized as well.

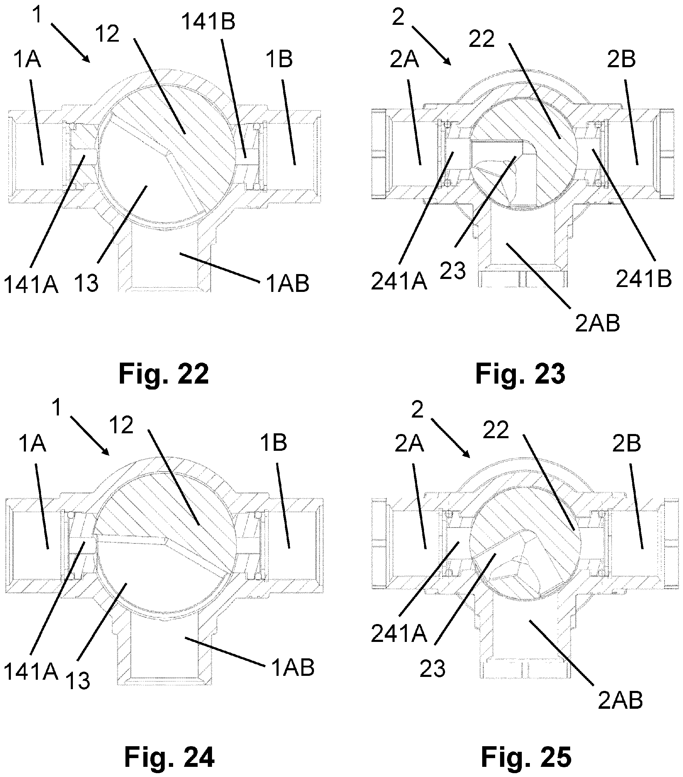

Operation of the control valve 3 according to the third embodiment is further explained with reference to **Figure 22** to **Figure 28**, showing sectional views through the first valve member 12 of the first sub-valve 1 **(****Figures 22, 24****,** **26, 28****)** and of the second valve member 22 of the second sub-valve 2 **(****Figures 23, 25****,** **27****),** with the sectional plane extending in each case perpendicular to the control valve axis VA and bisecting the respective valve member 12 or 22, respectively.

**Figures 22, 23** illustrate the situation for the A-end setting. A fluidic connection with maximal valve opening is present from the first A-port 1A to the first AB-port 1AB via the first A-port valve seat passage 141A and the first valve member passage 13, with the opening width being maximal. Similarly, a fluidic connection with maximal valve opening is present from the second A-port 2A to the second AB-port 2AB via the second A-port valve seat passage 241A and the second valve member passage 23. Further, the first B-port 1B is fluidically blocked by the first valve member 12 and the second B-port 2B is fluidically blocked by the second valve member 22. As the actuator coupler 31 and accordingly the first and second valve member 12, 22, are, starting in the configuration shown in **Figures 22, 23** rotated out of the A-end setting and towards the B-end setting (counter-clockwise in the figures), the opening width of the second sub-valve 2 will be continuously reduced, corresponding to the A-control range, while the first sub-valves 1 stays fully open at the beginning, corresponding to the A-open range.

**Figures 24, 25** illustrate the situation at a control setting s of 30°. The first A-port 1A is still fluidically coupled with the first AB-port with maximum opening width, and the first sub-valve 1 is accordingly still open. However, no fluidic coupling is any more present from the second A-port 2A to the second AB-port 2AB and the second sub-valve 2 is accordingly fully closed. The first and second B-port 1B, 2B stay blocked. As the movement continues, the fluidic path from the first A-port 1A to the first AB-port1AB will be continuously constricted by the first valve member 12, corresponding to the A-sided transition range.

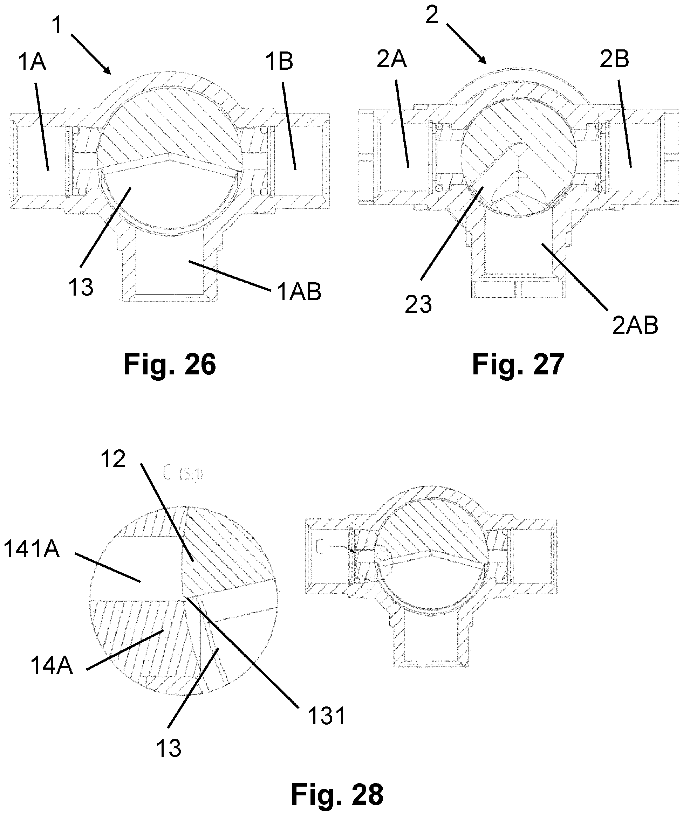

**Figures 26, 27, 28** illustrate the situation at the center setting of 45°, with **Figure 28** being an enlarged view of Detail C as indicated. While the first B-port 1B is (like the second A-port 2A and the second B-port 2B) fluidically fully blocked, a pressure relief connection 131 is present from the first A-port valve seat passage 141 to the first valve member A-passage 13A.

For the first to third embodiment as discussed so far, the first valve member 12 and the second valve member 22 are in each case formed integrally with the actuator coupler 31 or rigidly coupled with the actuator coupler 31 and accordingly move together and synchronously with each other and the actuator coupler 31. For the embodiments as discussed in the following, this not the case. Instead, the first valve member 1 and the second valve member 2, while being mechanically coupled, do not move synchronously. In particular, the first valve member 1 only moves over a small rotational angle of the actuator coupler 31. This is achieved via a first transmission device with a non-linear transmission device as explained in the following.

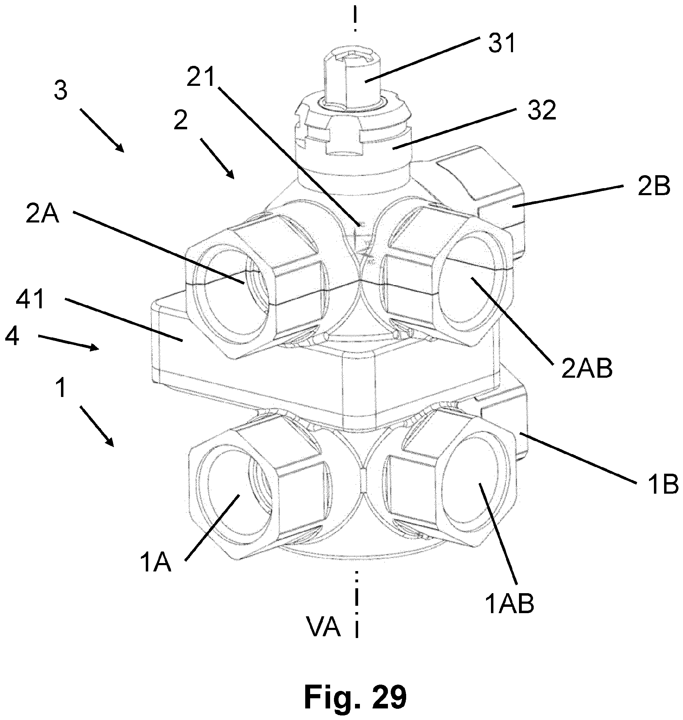

**Figure 29** shows a fourth embodiment of the control valve 3 in a perspective view. According to this design, the first sub-valve 1 is, as such, a three-way continuous control valve as generally known in the art and may be designed similar to the second sub-valve 2 of the embodiment as discussed before. Also, the second valve member of the second sub-valve 2 is formed integrally with or is rigidly coupled to the actuator coupler 31. The first valve member, however, is driven via a first transmission device 4 that includes a non-linear transmission device as discussed below. Due to the non-linear transmission device, in particular a mechanical switching device, the first sub-valve acts as switching valve. The first transmission device 4 is arranged in a first transmission device housing 41.

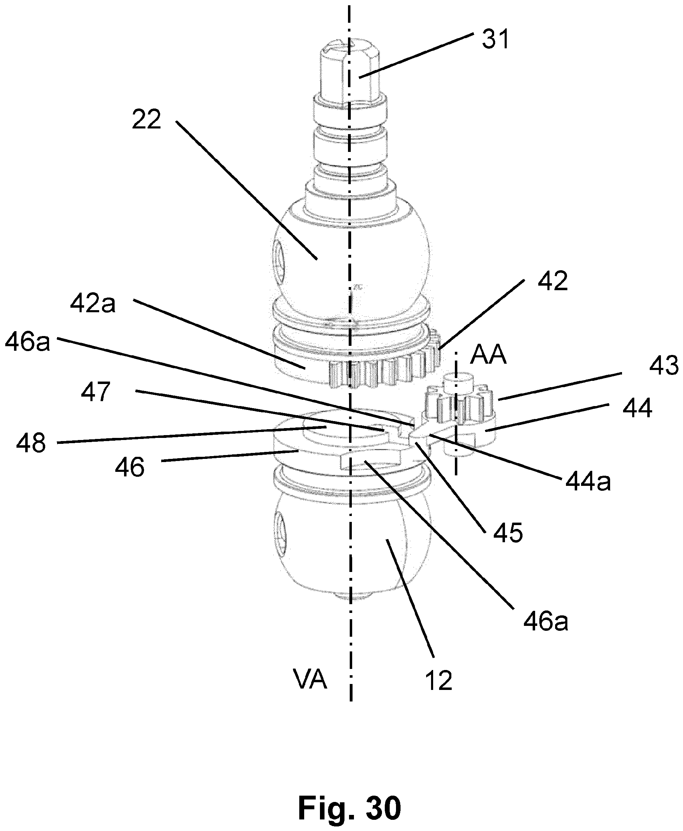

**Figure 30** shows major elements of the control valve 3 according to the fourth embodiment and in particular of the first transmission device 4 in a perspective and exploded view. The first transmission device 4 is a two-stage transmission device, with the first stage having a linear and the second stage having a non-linear characteristic.

The first stage includes a first stage input member in form of an in this design disk-shaped toothing-carrying member 42a. The toothing-carrying member 42a is arranged coaxially with respect to the control valve axis VA and is formed integrally with or rigidly coupled to the second valve member 22 opposite of the actuator coupler 31, respectively facing the first valve member 12. In the shown design, the toothing-carrying member 42a is realized as cylindrical disk. At a part of the circumference, the toothing-carrying member 42a carries a toothing 42. Since the rotational angle between the A-end setting and the B-end setting is 90°, the toothing 42 does not need to extend over the full circumference. The toothing-carrying member 42a however, could also be toothed on its complete circumference and accordingly be designed like a typical toothed wheel. The toothing 42 engages a switching mechanism driving toothed wheel 43 as first stage output member. The switching mechanism driving toothed wheel 43 is rotatably beared in the first transmission device housing 41 around a rotational auxiliary axis AA axis parallel to the control valve axis VA. The toothing-carrying member 42a with toothing 42 and the switching mechanism driving toothed wheel 43 form, in combination, a speed-increasing gear stage box with in this design a transmission ration of 1:3. The rotational speed of the switching mechanism driving toothed wheel 43 will accordingly be the threefold of the rotational speed of the toothing carrying-member 42a which is, in turn identical to the rotational speed of the second valve member 22a and the actuator coupler 31. The toothing-carrying member 42a and the switching mechanism driving toothed wheel 43 according form a speed-increasing transmission device.

The second stage of the first transmission device 4 is a formed by non-linear transmission device, specifically a mechanical switching device which is in the shown design exemplarily realized according to the principle of a Geneva mechanism.

The mechanical switching mechanism includes a blocking disk 44 with partially cylindrical contour. The blocking disk 44 carries a driving pin 45 via an eccentric lever 44a. The blocking disk 44, the eccentric lever 44a and the driving pin 45 are integrally formed or rigidly coupled, and are further integrally formed with or rigidly coupled to the switching mechanism driving toothed wheel 43. In combination, these elements are rotatable about an auxiliary axis AA. The coupling driving pin 45 will accordingly move on a circular path around the auxiliary axis AA as the switching mechanism driving toothed wheel 43 is driven by the toothing-carrying member 42A.

The mechanical switching mechanism further includes a generally cylindrical valve member driving disk 46 as output member. The valve member driving disk 46 is in this design formed integrally with the first valve member 12, facing the toothing-carrying member 42a and the second valve member 22. At the side facing the toothing-carrying member 42a. the valve member driving disk 46 has two step-shaped blocking recesses 46a (one partly hidden in **Figure 30**) that are arranged side by side along the circumference of the valve member driving disk 46. The blocking recesses 46a are in each case configured to alternatively receive the blocking disk 44 in a sliding manner and have a corresponding negative cylindrical contour. Symmetrically between the blocking recesses 46a, a radial driving pin receiving slot 47 is arranged that is configured to receive the driving pin 45.

Upon the toothing-carrying member 42a rotating, the switching mechanism driving toothed wheel 43 and accordingly also the blocking disk 44 with eccentric lever 44a and driving pin 45 will rotate at higher speed in accordance with the transmission ratio of the first stage as mentioned before. Rotation of the valve member driving disk 46 and the first valve member 12 is in this configuration prevented due to the blocking disk 44 being received in a blocking recess 46a. This corresponds to the A-open range and B-open range, respectively. At some point, the driving pin 45 will enter the driving pin receiving slot 47 and, upon further rotation, move radially in the driving pin receiving slot 47, thereby driving rotation the first valve member 12 via the valve member driving disk 46. It is noted that in this configuration the cylindrical surface of the blocking disk 44 does not contact the counter surface of the blocking recess 46a. Following a configuration where the driving pin 45 is closest to the control valve axis VA respectively at the deepest position of the driving pin 45 in the driving pin receiving slot 47, the driving pin 45 will move outwards again, away from the control valve axis VA and further continue to drive the first valve member 12 via the valve member driving disk 46. At some point, the driving pin 45 will again exit the driving pin receiving slot 47 and the blocking disk 44 will be received in the other blocking recess 46a, thereby again blocking a rotation of the valve member driving disk 46 and the first valve member 12. The movement range where the driving pin 45 is received in the driving pin receiving slot 47 corresponds to the A-and B-sided transition range and the intermediate range. The configuration where the driving pin 45 reverses its radial movement direction in the driving pin receiving slot 47 corresponds to the center setting C.

In the shown design, the valve member driving disk 46 further carries a concentrically cylindrical support disk 48 that is glidingly received in a corresponding cylindrical support recess (not visible) of the toothing-carrying member 26a, thereby supporting the toothing-carrying member 42a and the first valve member 12.

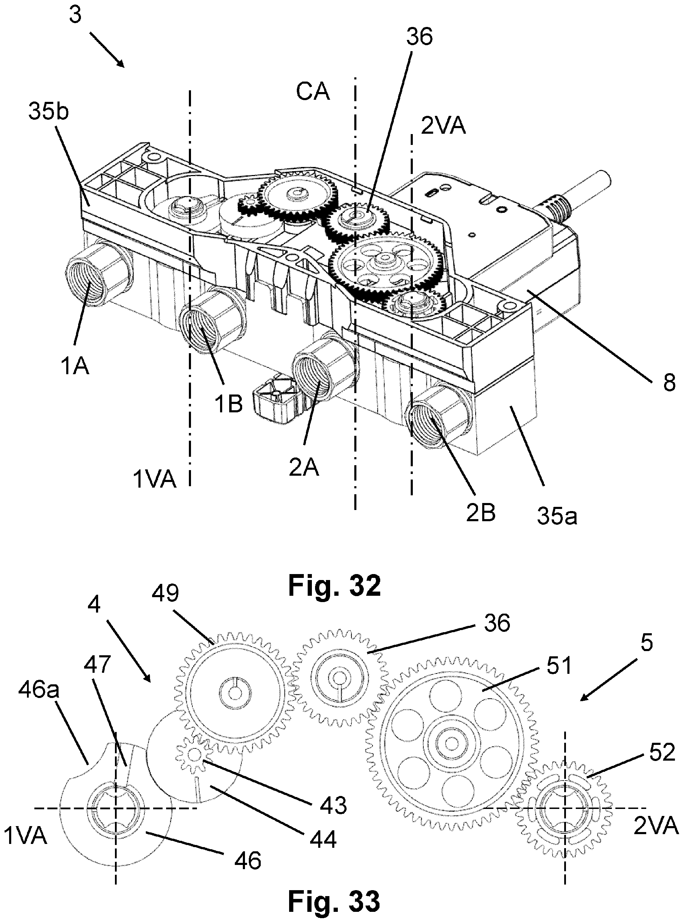

Regarding the operation of the mechanical switching mechanism, further see **Figure 33** to **Figure 36**, relating to a fifth embodiment with a substantially identical mechanical switching mechanism.

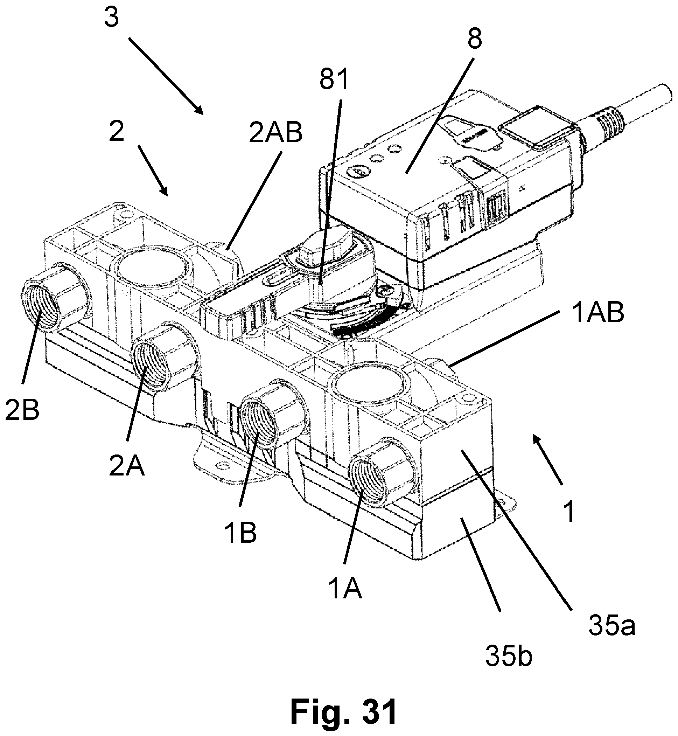

**Figure 31** shows a fifth embodiment of the control valve 3 in a perspective view. For illustrative purposes, the control valve 3 is shown together with an in this example motorized valve actuator 8. In addition, the control valve 1 may be operated via optional manual valve control handle 81. It is noted that such valve actuator 8 may also be attached to the control valve 3 according to any of the before-discussed embodiments via stub 32. In the shown design, the control valve 1 includes a transmission housing 35b in which the first transmission device 4 and the second transmission device 5 are arranged, and a fluidics housing 35a in which the valve members and the ports are arranged.

In a number of aspects, the fifth embodiment of the control valve 3 corresponds to the fourth embodiment. The present discussion is therefore mainly focused on the differences in the interest of conciseness. Like in the fourth embodiment, the first sub-valve 1 and the second sub-valve 2 are in principle designed identically and are designed as continuous control three-way ball valves, with the first sub-valve being operated as switching valve due to a first transmission device via with a mechanical switching device. In this design, however, also the second valve member is not driven directly by the actuator coupler, but via a second transmission device.

In contrast to the fourth embodiment, the first sub-valve 1 and the second sub-valve 2 are not arranged coaxially, but in a side-by-side member. Like in the first and second embodiment, the first A-port 1A and the first B-port 1B as well as the second A-port 2A and the second B-port 2B are arranged parallel to each other on one side of the valve members, while the first AB-port 1AB and the second AB-port 2AB are arranged parallel thereto on the opposite side. For fluidically connecting the valve members with the ports, internal fluidic passages (not visible) are foreseen, in particular L-shaped channels or passages for coupling with the first A-port 1A and the first B-port 1B with the first valve member and for coupling the second A-port 2A and the second B-port 2B with the second valve member.

**Figure 32** shows the fifth embodiment of the control valve 3 in a view similar to **Figure 31**, but upside down. A typically present cover is further removed, allowing a view on the first and second transmission devices. The first sub-valve axis 1VA of the first sub-valve 1 and the second sub-valve axis 2VA of the second sub-valve extend parallel to each other and parallel to the coupler axis CA on opposite sides of the coupler axis CA. The first sub-valve axis 1VA is the rotational axis of the first valve member 12 and the second sub-valve axis 2VA is the rotational axis of the second valve member 22.

**Figure 33** shows the first and second transmission device of the fifth embodiment in a top view and for the A-end setting of 0°. Regarding the second transmission device 5 via which the second valve member 22 is driven, the central toothed wheel 36 which is driven by the actuator coupler 31 engages a second transmission device intermediate toothed wheel 51 which, in turn, engages a second transmission device output toothed wheel 52. The second transmission device output toothed wheel 52 rotates about the second sub-valve axis 2VA and is formed integrally with or rigidly coupled to the second valve member 22. Since in this design the tooth numbers of the central toothed wheel 36 and the second transmission device output toothed wheel 52 are identical, the second transmission device output toothed wheel 52 and accordingly the second valve member 22 will have the same rotational speed and rotational direction as the central toothed wheel 36 and accordingly the actuator coupler. The first stage of the second transmission device is accordingly a speed recuing stage and the second stage is a speed increasing stage of the same ratio. The second transmission device 5 serves in this design the purpose of bridging the distance between the coupler axis CA and the second sub-valve axis 2VA.

Regarding the first transmission device 4 via which the first valve member 12 is driven, the central toothed wheel 36 engages a first transmission device intermediate toothed wheel 49, which, in turn, engages the switching mechanism driving toothed wheel 43. It is noted that the central toothed wheel 43 drives both the first transmission device intermediate toothed wheel 49 of the first transmission device 4 and the second transmission device intermediate toothed wheel 51 of the second transmission device 5 and is accordingly a functional part of both the first transmission device 4 and the second transmission device 5. The teeth numbers of the central toothed wheel 43, the first stage intermediate toothed wheel 49 and the switching mechanism driving toothed wheel 43 are selected such that a rotational speed increase of factor 3 is realized.

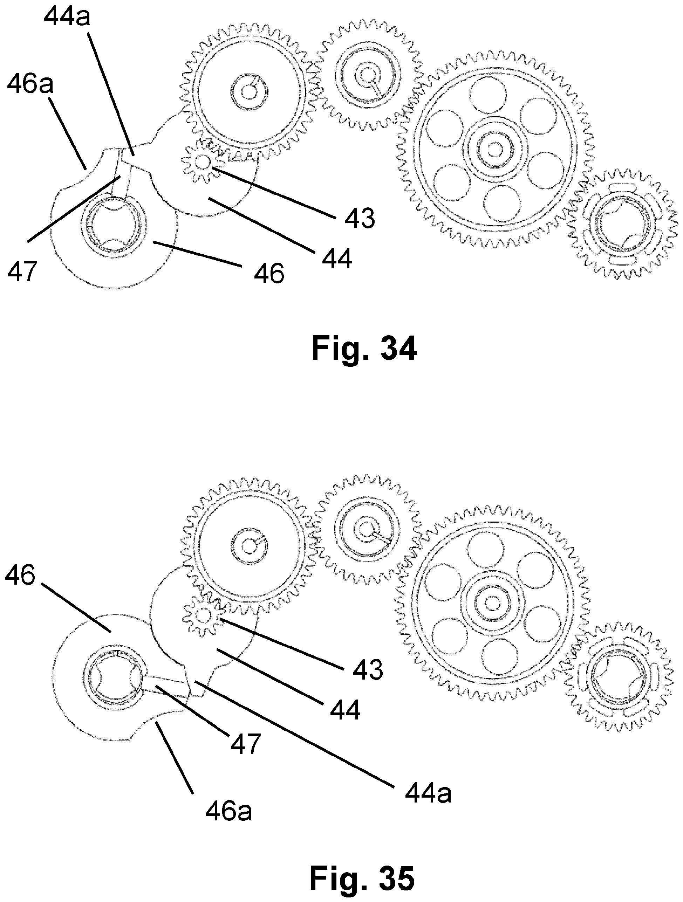

The design and operation of the further elements of the first transmission device 4 generally corresponds to the fourth embodiment and is therefore not described in detail. **Figure 34** shows the transmission devices of the fifth embodiment in in a view corresponding to **Figure 33** for a control setting of 30°, at the transition of the A-open range to the A-sided transition range. Here, the driving pin 45 (not visible in the figures for the fifth embodiment) is about to enter the driving pin receiving slot 47 and accordingly drive the valve member driving disk 46 with the first valve member 12. **Figure 35** illustrates control setting of 60° where the driving pin 45 is leaving the driving pin receiving slot. **Figure 36** illustrates the B-end setting of 90°. Note that the valve member driving disk 46 has rotated by 90° between the configuration of **Figure 34** and **Figure 35**. It has, however, neither moved between the configurations of **Figure 33** and **Figure 34**, nor between the configuration of **Figure 35** and **Figure 36**.

In both the fourth and fifth embodiment, either of first sub-valve 1 or the second sub-valve 2 may further have a pressure relief feature. Such pressure relief feature may, e.g. be designed according to the disclosure of WO2015173071A1 and include a groove in either of the first valve member 12 or second valve member 22.

Rather, the words used in the specification are words of description rather than limitation, and it is understood that various changes may be made without departing from the Spirit and scope of the invention.

### REFERENCE SIGNS

- 1: first sub-valve
- 1A: first A-port
- 1B: first B-port
- 1AB: first AB-port
- 1VA: first sub-valve axis
- 11: first sub-valve housing
- 111: first valve coupling flange
- 112: valve coupling stub
- 113: valve member coupling shaft
- 12: first valve member
- 12A: first valve member A-part
- 12B: first valve member B-part
- 13: first valve member passage
- 13': radial delimination of first valve member passage
- 13A: first valve member A-passage
- 13A': first portion of first valve member A-passage
- 13A": second portion of first valve member A-passage
- 13B: first valve member B-passage
- 13B': first portion of first valve member B-passage
- 13B": second portion of first valve member B-passage
- 131: pressure relief connection (pressure relief feature)
- 14A: first A-port valve seat
- 14B: first B-port valve seat
- 141A: first A-port valve seat passage
- 141B: first B-port valve seat passage
- 15: first coupling passage
- 2: second sub-valve
- 2A: second A-port
- 2B: second B-port
- 2AB: second AB-port
- 2VA: second sub-valve axis
- 21: second sub-valve housing
- 211: second valve coupling flange
- 212: valve coupling receptacle
- 213: valve member coupling receptacle
- 214: retaining ring
- 22: second valve member
- 22A: second valve member A-part
- 22B: second valve member B-part
- 23: second valve member passage
- 23A: second valve member A-passage
- 23B: second valve member B-passage
- 24A: second A-port valve seat
- 24B: second B-port valve seat
- 241A: second A-port valve seat passage
- 241B: second B-port valve seat passage
- 25: second coupling passage
- 3: control valve
- 31: actuator coupler
- 32: stub
- 33: connecting shaft
- 34: valve cap
- 35a: fluidics housing
- 35b: transmission housing
- 36: central toothed wheel
- 4: first transmission device
- 41: first transmission device housing
- 42a: toothing-carrying member
- 42: toothing
- 43: switching mechanism driving toothed wheel
- 44: blocking disk
- 44a: eccentric lever
- 45: driving pin
- 46: valve member driving disk
- 46a: blocking recess
- 47: driving pin receiving slot
- 48: support disk
- 49: first transmission device intermediate toothed wheel
- 5: second transmission device
- 51: second transmission device intermediate toothed wheel
- 52: second transmission device output toothed wheel
- 8: valve actuator
- 81: manual valve control handle
- AA: auxiliary axis
- CA: coupler axis
- VA: control valve axis
- 1VA: first sub-valve axis
- 2VA: second sub-valve axis
- s: control setting
- C: center setting
- PA: passage axis

## Claims

1. Control valve (3), the control valve (3) including a first sub-valve (1) and a second sub-valve (2), the first sub-valve (1) and the second sub-valve (2) being three-way-valves, the first sub-valve (1) and the second sub-valve (2) being fluidically separate,
- wherein the first sub-valve (1) has a first A-port (1A), a first AB-port (1AB), and a first B-port (1B), and the second sub-valve (2) has a second A-port (2A), a second AB-port (2AB), and a second B-port (2B),
- wherein the control valve (3) includes an actuator coupler (31), the actuator coupler (31) being configured for coupling to an output member of a valve actuator (8), wherein a control setting (s) of the actuator coupler (31) is continuously adjustable between an A-end setting and a B-end setting,
- wherein the first sub-valve (1) has a first valve member (12) and the second sub-valve (2) has a second valve member (22), wherein the first valve member (12) and the second valve member (22) are movable via the actuator coupler (31),
- wherein the first sub-valve (1) is in an A-open configuration if the control setting (s) is in an A-open range and is in an alternative B-open configuration if the control setting (s) is in a B-open range, wherein the A-open range extends to the A-end setting and the B-open range extends to the B-end setting,
∘ wherein in the A-open configuration the first A-port (1A) is fluidically connected to the first AB-port (1AB) and the first B-port (1B) is fluidically blocked,
∘ wherein in the B-open configuration the first B-port (1B) is fluidically connected to the first AB-port (1AB) and the first B-port (1B) is fluidically blocked,
- wherein the second sub-valve (2) is in an A-control configuration if the control setting (s) is in an A-control range and is in an alternative B-control configuration if the control setting (s) is in a B-control range, wherein the A-control range extends to the A-end setting and the B-control range extends to the B-end setting,
∘ wherein in the A-control configuration the second A-port (2A) is fluidically connected to the second AB-port (2AB) and the second B-port (2B) is fluidically blocked, wherein a second valve opening of the second sub-valve (2) decreases, in particular monotonically decreases, with the control setting (s) moving away from the A-end setting,
∘ wherein in the B-control range, the second B-port (2B) is fluidically connected to the second AB-port (2AB) and the second A-port (2A) is fluidically blocked, wherein the second valve opening decreases with the control setting (s) moving away from the B-end setting,
- wherein the control valve (3) is in a neutral configuration if the control setting (s) is in a neutral range between the A-control range and the B-control range, wherein the neutral range is between and adjacent to the A-control range and the B-control range, wherein at least three of the first A-port (1), the first B-port (1b), the second A-port (2A) and the second B-port (2B) are fluidically blocked in the neutral configuration.

2. Control valve (3) according to claim 1, wherein the first sub-valve (1) is in an A-sided transition configuration if the control setting (s) is in an A-sided transition range and is in a B-sided transition configuration if the control setting (s) is in a B-sided transition range, wherein the A-sided transition range is adjacent to the A-open range and the B-sided transition range is adjacent to the B-open range,
- wherein in the A-sided transition configuration the first A-port is fluidically connected the first AB-port (1AB) and the first B-port (1B) is fluidically blocked, wherein a first valve opening of the first sub-valve (1) decreases with the control setting (s) moving away from the A-end setting,
- wherein in the B-sided transition configuration the first B-port (1B) is fluidically connected the first AB-port (1AB) and the first A-port (1A) is fluidically blocked, wherein the first valve opening of the first sub-valve (1) decreases with the control setting (s) moving away from the B-end setting.

3. Control valve (1) according to claim 2, wherein the first sub-valve is in an intermediate configuration if the control setting (s) is in an intermediate range, the intermediate range being between and adjacent to the A-sided transition range and the B-sided transition range, wherein the first valve opening is substantially constant, in particular zero or substantially zero, in the intermediate range.

4. Control valve (3) according to claim 3, wherein the intermediate range coincides with the neutral range or is a sub-range of the neutral range.

5. Control valve (3) according to any of claim 1 to claim 4, wherein the first valve opening is constant, in particular maximal, in the A-open configuration and the B-open configuration.

6. Control valve (3) according to any of claim 1 to claim 5, wherein the second valve opening is symmetrical or essentially symmetrical to a center setting (C), the center setting (C) being symmetrical between the A-end setting and the B-end setting, wherein the center setting is in the neutral range.

7. Control valve (3) according to any of claim 1 to claim 6, wherein the first sub-valve (1) and the second sub-valve (2) are rotatory valves, and wherein the actuator coupler (31) is rotatably beared.

8. Control valve (3) according to claim 7, wherein the coupler axis (CA), the first valve member axis (VA1) and the second valve member axis (VA2) extend in each case parallel and offset to each other.

9. Control valve (3) according to any of claim 1 to claim 9, wherein the first sub-valve (1) and the second sub-valve (2) are ball valves.

10. Control valve (3) according to claim 9, wherein the first valve member (12) has a first valve member diameter and the second valve member (22) has a second valve member diameter different from the first valve member diameter.

11. Control valve (3) according to any of claim 1 to claim 10, wherein the first valve member (12) and the second valve member (22) have differently designed valve member passages.

12. Control valve (3) according to claim 11, wherein the actuator coupler (31), the first valve member (12) and the second valve member (22) are in each case formed integrally or are rigidly coupled with each other.

13. Control valve (3) according to any of claim 1 to claim 12, wherein the actuator coupler (31) and the first valve member (12) are coupled via a first transmission device (4), wherein the first transmission device (4) includes a non-linear transmission device, wherein the non-linear transmission device in particular is or includes a Maltese cross mechanism or Geneva mechanism.

14. Control valve (3) according to any of claim 1 to claim 13, wherein the first valve member (12) is permeated by a first valve member A-passage (13A) and by first valve member B-passage (13B) distinct from the first valve member A-passage (13A), and/or wherein the second valve member (22) is permeated by a second valve member A-passage (23A) and by a second valve member B-passage (23B) distinct from the second valve member A-passage (23A).

15. Control valve (3) according to any of claims 1 to 14, wherein in at least part of the neutral range, in particular the center setting (C),
- one of the first A-port (1A) and the first B-port (1B) is fluidically connected with the first AB-port (1AB) via a pressure relief connection, or alternatively,
- one of the second A-port (2A) and the second B-port (2B) is fluidically connected with the second AB-port (2AB) via the pressure relief connection.
